# EUROPEAN PATENT APPLICATION

(11) **EP 4 601 066 A1**
(43) Date of publication of application: **13.08.2025**
(21) Application number: 23925776.9
(22) Date of filing: 09.03.2023
(51) Int. Cl.: H01M 10/0567, H01M 10/0525

(54) **ELECTROLYTE, BATTERY CONTAINING SAME, AND ELECTRIC DEVICE**

(71) Applicant: Contemporary Amperex Technology (Hong Kong) Limited, Central (HK)
(72) Inventor: PENG, Chang, Ningde, Fujian 352100 (CN); CHEN, Peipei, Ningde, Fujian 352100 (CN); LIU, Jiao, Ningde, Fujian 352100 (CN); XU, Ningbo, Ningde, Fujian 352100 (CN); WU, Degui, Ningde, Fujian 352100 (CN)
(74) Representative: Behr, Wolfgang
(86) International application number: PCT/CN2023/080483
(87) International publication number: WO 2024/183059

(57) **Abstract**

Embodiments of this application provide an electrolyte solution, a battery containing the same, and a power consuming apparatus. The electrolyte solution includes: a first additive, where the first additive includes at least one of compounds represented by formula (I) and formula (II); and a second additive, where the second additive includes at least one of SO₂ and CO₂. Cycle performance and service life of the battery containing the electrolyte solution are both improved.

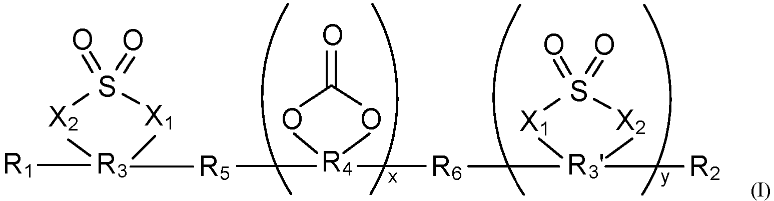

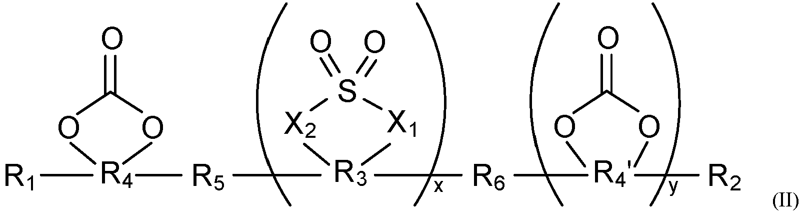

## Description

### TECHNICAL FIELD

This application relates to the technical field of batteries, and in particular, to an electrolyte solution, a battery containing the same, and a power consuming apparatus.

### BACKGROUND

In recent years, due to their high energy density and cycle performance, secondary batteries are widely used in energy storage power supply systems such as hydroelectric power stations, thermal power stations, wind power stations, and solar power stations, as well as a variety of fields such as power tools, electric bicycles, electric motorcycles, electric vehicles, military equipment, and aerospace. With the great development and wide application of secondary batteries, higher requirements are posed on the cycle performance, storage life, and other performance of secondary batteries.

Therefore, how to improve the cycle performance and storage life of secondary batteries is an urgent technical problem to be solved.

### SUMMARY

Embodiments of this application provide an electrolyte solution, a battery containing the same, and a power consuming apparatus. Cycle performance and storage life of the battery containing the electrolyte solution are both improved.

According to a first aspect, an electrolyte solution is provided, including: a first additive, where the first additive includes at least one of compounds represented by formula (I) and formula (II): 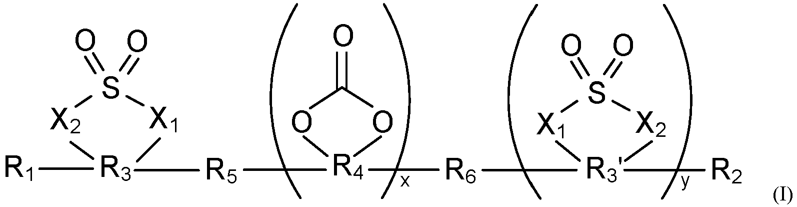 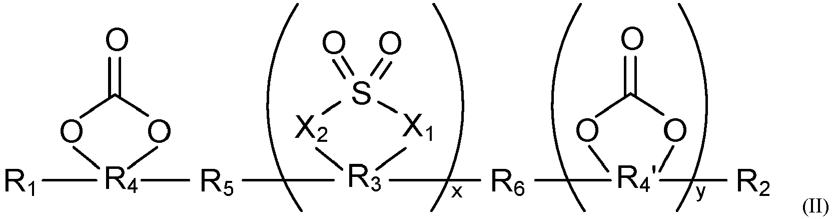 where x and y are each independently any natural number from 0 to 5, x + y ≥ 1, and X₁ and X₂ include O or CH₂ and X₁ and X₂ are not CH₂ simultaneously, R₃, R₄, R₃', and R₄' each independently include at least one of a saturated hydrocarbon group or an unsaturated hydrocarbon group, and R₅ and R₆ each independently include at least one of a saturated hydrocarbon group or an unsaturated hydrocarbon group having 1 to 6 carbon atoms, and a single bond; and a second additive, where the second additive includes at least one of SO₂ and CO₂.

In the embodiments of this application, the electrolyte solution includes a first additive and a second additive, and the first additive includes at least one of compounds represented by formula (I) and formula (II). The compounds represented by formula (I) and formula (II) include a plurality of cyclic ester structures. The compounds have a large molecular structure, a large steric hindrance, and a weak solvation ability. Therefore, the compounds have low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery. Further, the compounds represented by formula (I) and formula (II) may include a cyclic carbonate structure and a cyclic sulfate structure and/or a cyclic sulfonate structure. In this way, the first additive undergoes a copolymerization reaction in the electrolyte solution and participates in film forming at the formation stage of the battery. A formed copolymer has advantages of a polycarbonate polymer and a polysulfate polymer and/or a polysulfonate polymer. The crystallinity of the copolymer is reduced, the toughness of the formed interface film is improved, and the stability of the interface film is improved, thereby prolonging the storage life of the battery. In addition, the electrolyte solution includes at least one of SO₂ and CO₂. SO₂ and CO₂ can change the bond breaking and forming form of the first additive in the formation stage, and inhibit the first additive from forming SO₂ and CO₂ in the formation stage, but form more inorganic-organic compact interface films containing sulfate, carbonate, and polycarbonate-polysulfate/polysulfonate, that is, the copolymer contains more sulfate and carbonate structures, so that the interface film is more compact, to better prevent co-intercalation of other molecules in the electrolyte solution, and avoid the damage to an electrode material caused by the co-intercalation of the other molecules, thereby further improving the cycle stability and storage life of the battery.

In a possible embodiment, a mass content of the second additive in the electrolyte solution is 10 ppm to 1000 ppm, and optionally, the mass content of the second additive in the electrolyte solution is 500 ppm to 800 ppm.

If the content of SO₂ and CO₂ is too low, the first additive cannot be effectively inhibited from forming SO₂ and CO₂ in the formation stage. If the content of SO₂ and CO₂ is too high, excessive sulfate ions and carbonate ions exist in the electrolyte solution, and may be combined with metal ions generated by the electrode material, reducing free metal ions in the electrolyte solution, resulting in the capacity fade of the battery.

In a possible embodiment, a mass content of the first additive in the electrolyte solution is 0.0001% to 10%, and optionally, the mass content of the first additive in the electrolyte solution is 0.01% to 5%.

If the content of the first additive in the electrolyte solution is too low, no enough copolymer can be formed to participate in film forming, which affects the stability of the interface film, resulting in an unstable interface between the electrode plate and the electrolyte solution. If the content of the first additive in the electrolyte solution is too high, the viscosity of the electrolyte solution is too high, which affects the infiltration of the electrode plate by the electrolyte solution, and affects the charge and discharge performance of the battery.

In a possible embodiment, R₁ and R₂ each independently include at least one of H, a halogen atom, a substituted hydrocarbon group or an unsubstituted hydrocarbon group, and a group containing an unsaturated double bond or triple bond.

In the embodiments of this application, a halogen atom is introduced into the compounds of formula (I) and formula (II) including a cyclic carbonate structure and a cyclic sulfate structure and/or a cyclic sulfonate structure, so that contents of inorganic components in the compounds can be increased to improve the insulativity of the interface film; a hydrocarbon group is introduced into the compounds, so that the stability of the compounds can be improved; and unsaturated double bonds are introduced into an end group of the compounds, so that the first additive has a multifunctional group structure, and is easier to form a crosslinked network structure in the film forming stage, which can better wrap the particle structure of the electrode material, and can inhibit the expansion of the electrode material, thereby further improving the cycle and storage performance.

In a possible embodiment, R₁ and R₂ each independently include at least one of H, F, a straight-chain alkyl group or branched-chain alkyl group having 1 to 3 carbon atoms, a straight-chain perfluorosubstituted alkyl group or branched-chain perfluorosubstituted alkyl group having 1 to 3 carbon atoms, and a group having 1 to 3 carbon atoms and containing an unsaturated double bond.

In the embodiments of this application, the structures of the compounds of formula (I) and formula (II) are optimized by adjusting the number of carbon atoms of the groups introduced into the compounds of formula (I) and formula (II), so that the first additive has suitable solubility and viscosity in the electrolyte solution, and can better participate in film forming in the electrolyte solution, to improve the stability of the interface film between the electrode plate and the electrolyte solution.

In a possible embodiment, R₅ and R₆ each independently include at least one of a saturated hydrocarbon group or an unsaturated hydrocarbon group having 1 to 3 carbon atoms.

In the embodiments of this application, if the number of carbon atoms of a hydrocarbon group structure among a plurality of ester groups is too large, the hydrocarbon group structure is too long, which affects the compactness of the electrode interface film formed by the first additive. The number of carbon atoms in R₅ and R₆ is adjusted, so that the length of the hydrocarbon group structure among the plurality of ester groups is suitable, so as to form an electrode interface film with a compact structure.

In a possible embodiment, the first additive includes at least one of the following substances:

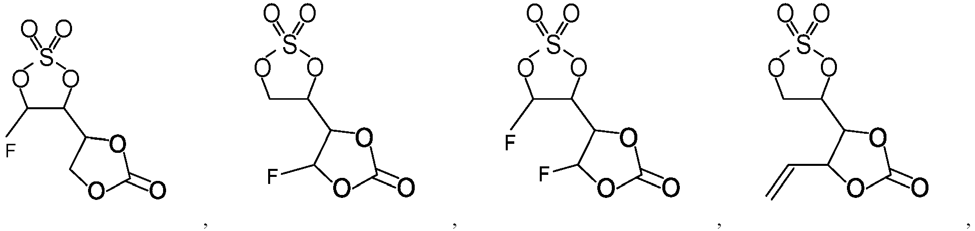

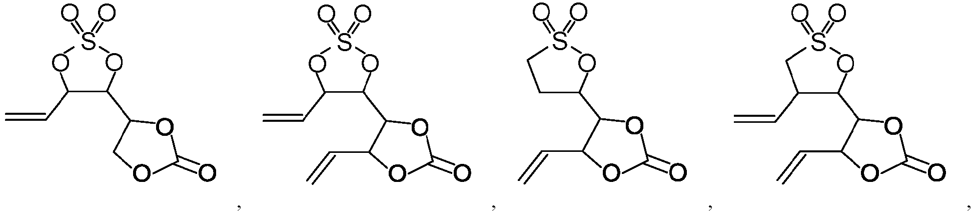

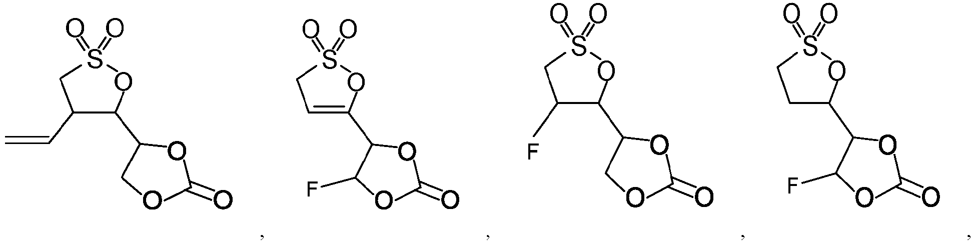

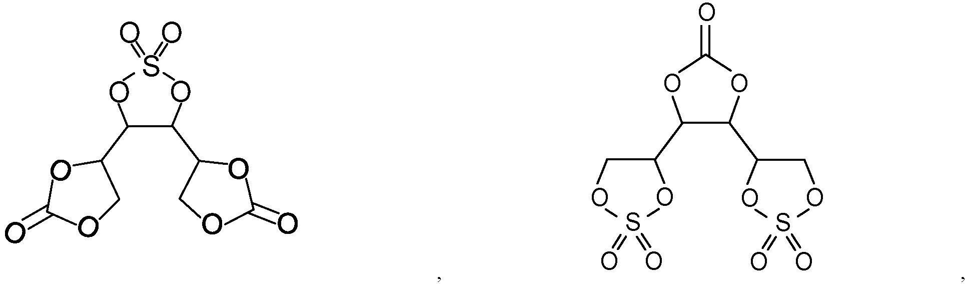

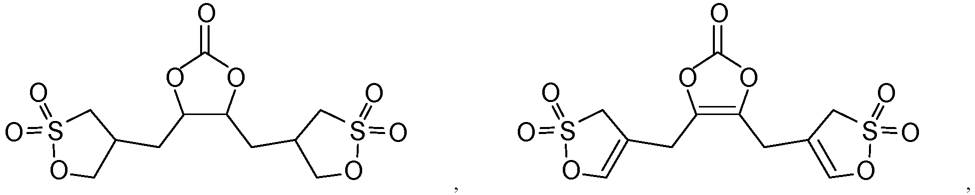

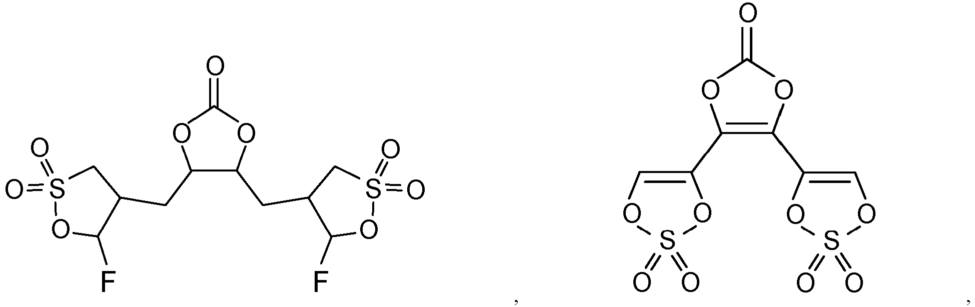

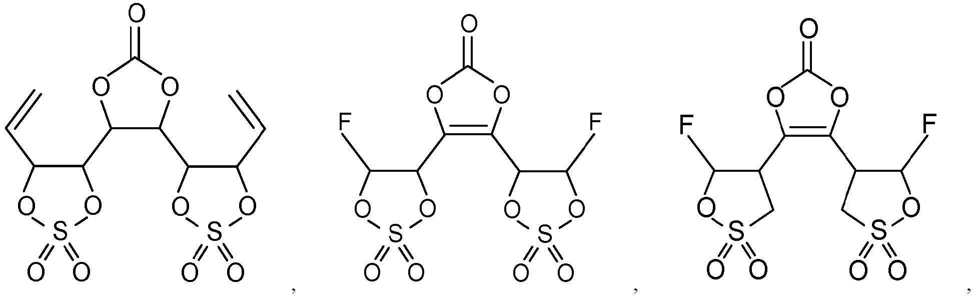

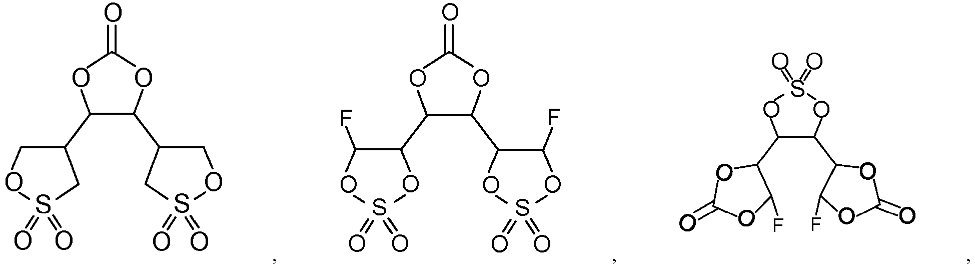

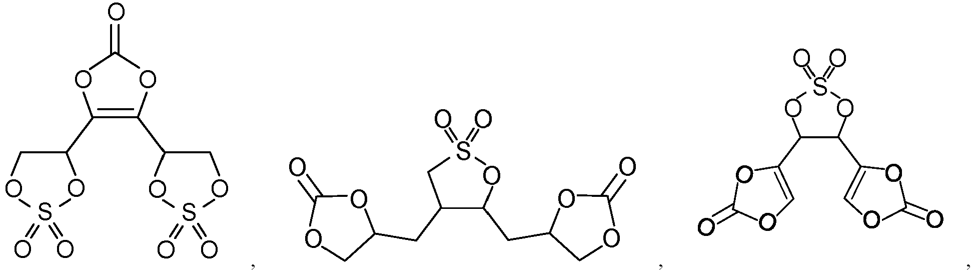

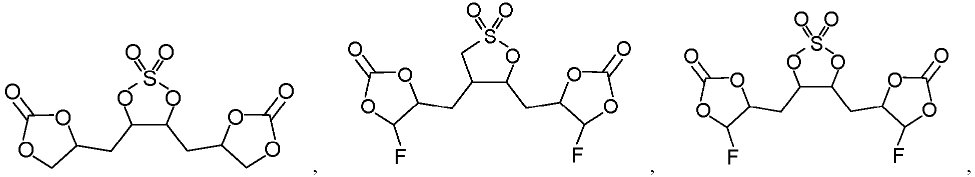

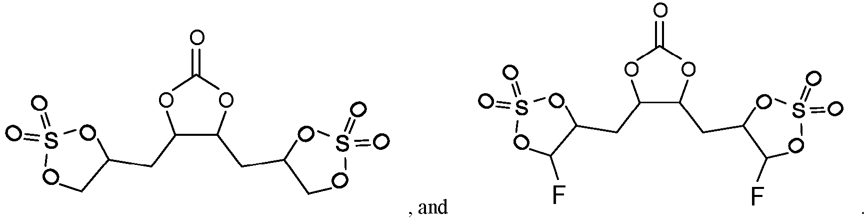

In a possible embodiment, the electrolyte solution further includes a third additive, and the third additive includes at least one of carbonate and sulfate.

In the formation stage of the battery, carbonate and sulfate form monomer reactive free radicals under an electrochemical reaction, thereby improving a reaction conversion rate of copolymerizing the first additive to form a copolymer. In this way, an interface film of the copolymer initially formed has a larger molecular weight and is more compact, which further improves the initial film-forming quality.

In a possible embodiment, the third additive includes at least one of vinylene carbonate, difluoroethylene carbonate, fluoroethylene carbonate, vinyl ethylene carbonate, ethylene sulfate, and bis(ethylene sulfate).

In a possible embodiment, the electrolyte solution further includes a polymerization inhibitor, and optionally, the polymerization inhibitor includes at least one of hydroquinone and 2,6-di-tert-butyl-p-cresol.

Hydroquinone and 2,6-di-tert-butyl-p-cresol are added to the electrolyte solution to serve as a polymerization inhibitor, to reduce a risk of a chemical reaction between substances in the electrolyte solution under full contact during transportation of the battery, thereby reducing a risk of damaging components of the electrolyte solution.

In a possible embodiment, a mass content of the polymerization inhibitor in the electrolyte solution is less than 20 ppm, and optionally, the mass content of the polymerization inhibitor in the electrolyte solution is less than 10 ppm.

The content of the polymerization inhibitor in the electrolyte solution is inadvisable to be too high. Otherwise, the copolymerization reaction of the first additive is inhibited, the film forming of the battery in the formation stage is affected, and a stable interface film cannot be formed between the electrode plate and the electrolyte solution. The content of the polymerization inhibitor is controlled, so that the film-forming quality of the battery in the formation stage is improved, thereby improving the service performance and service life of the battery.

In a possible embodiment, the electrolyte solution further includes a solvent, and the solvent has a relative dielectric constant greater than 2 and a viscosity less than 2 mPa·s at 25°C.

If the relative dielectric constant of the solvent in the electrolyte solution is too small or the viscosity is too high, the additive is difficult to dissolve in the solvent.

In a possible embodiment, the solvent includes at least one of carbonate, carboxylic acid ester, ether, sulfone, fluorocarbonate, fluorocarboxylate, fluoroether, and fluorosulfone.

In a possible embodiment, the electrolyte solution further includes a metal salt, the metal salt includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorooxalate borate, lithium bis(oxalato)borate, lithium difluorophosphate, lithium difluorobis(oxalato)phosphate, and lithium tetrafluoro(oxalato)phosphate, and optionally, the metal salt includes at least one of lithium hexafluorophosphate and lithium bis(fluorosulfonyl)imide.

In a possible embodiment, an acidity value of the electrolyte solution is less than 800 ppm.

If the acidity value of the electrolyte solution is too large, the first additive is likely to be unstable and degraded, making it difficult to form a copolymer and affecting the film-forming quality.

According to a second aspect, a battery is provided, including: the electrolyte solution in the above first aspect or any possible embodiment of the first aspect.

According to a third aspect, a power consuming device is provided, including: the battery in the above second aspect or any possible embodiment of the second aspect, where the battery is configured to provide electric energy.

In the embodiments of this application, the electrolyte solution includes a first additive and a second additive, and the first additive includes at least one of compounds represented by formula (I) and formula (II). The compounds represented by formula (I) and formula (II) include a plurality of cyclic ester structures. The compounds have a large molecular structure, a large steric hindrance, and a weak solvation ability. Therefore, the compounds have low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery. Further, the compounds represented by formula (I) and formula (II) may include a cyclic carbonate structure and a cyclic sulfate structure and/or a cyclic sulfonate structure. In this way, the first additive undergoes a copolymerization reaction in the electrolyte solution and participates in film forming at the formation stage of the battery. A formed copolymer has advantages of a polycarbonate polymer and a polysulfate polymer and/or polysulfonate. The crystallinity of the copolymer is reduced, the toughness of the formed interface film is improved, and the stability of the interface film is improved, thereby prolonging the storage life of the battery. In addition, the electrolyte solution includes at least one of SO₂ and CO₂. SO₂ and CO₂ can change the bond breaking and forming form of the first additive in the formation stage, and inhibit the first additive from forming SO₂ and CO₂ in the formation stage, but form more inorganic-organic compact interface films containing sulfate, carbonate, and polycarbonate-polysulfate/polysulfonate, that is, the copolymer contains more sulfate and carbonate structures, so that the interface film is more compact, to better prevent co-intercalation of other molecules in the electrolyte solution, and avoid the damage to an electrode material caused by the co-intercalation of the other molecules, thereby further improving the cycle stability and storage life of the battery.

### BRIEF DESCRIPTION OF THE DRAWINGS

To provide a clearer explanation of the technical solutions of the embodiments of this application, a brief introduction will be given to the accompanying drawings required in the embodiments of this application. It is evident that the accompanying drawings described below are only some embodiments of this application. For ordinary technical personnel in the art, other accompanying drawings can be obtained based on the drawings without any creative effort.
FIG. 1 is a schematic diagram of a battery cell disclosed in an embodiment of this application;
FIG. 2 is an exploded schematic structural diagram of a battery cell disclosed in an embodiment of this application;
FIG. 3 is an exploded schematic structural diagram of a battery disclosed in an embodiment of this application; and
FIG. 4 is a schematic diagram of a power consuming apparatus disclosed in an embodiment of this application.

The drawings are not drawn in an actual proportion.

Reference numerals in the specific embodiments are as follows:
Battery 10, box 11, battery cell 20, housing 21, electrode assembly 22, and cover plate 23.

### DETAILED DESCRIPTION

Embodiments of an electrolyte solution, a battery cell containing the same, a battery, and a power consuming apparatus of this application are specifically disclosed in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

In the descriptions of this application, it should be noted that, unless otherwise stated, "a plurality of" means two or more; and the orientations or positional relationships indicated by the terms "upper", "lower", "left", "right", "inside", "outside", and the like are merely intended to help describe this application and simplify the descriptions other than indicate or imply that the apparatuses or components must have specific orientations, or be constructed and manipulated with specific orientations, and therefore shall not be understood as limitations on this application. Moreover, the terms "first", "second", "third" and the like are used for descriptive purposes only and are not to be construed as indicating or implying relative importance.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

Unless otherwise specified, all embodiments and optional embodiments of this application may be combined with each other to form new technical solutions.

Unless otherwise specified, all technical features and optional technical features of this application can be combined to form new technical solutions.

Unless otherwise specified, the following terms have the following meanings. Any undefined terms have their technically recognized meanings.

"Alkyl group" refers to a monovalent saturated hydrocarbon group having one or more carbon atoms, optionally 1 to 18 carbon atoms. For example, alkyl groups include straight-chain alkyl groups and branched-chain alkyl groups, such as methyl (CH₃-), ethyl (CH₃CH₂-), n-propyl (CH₃CH₂CH₂-), isopropyl ((CH₃)₂CH-), n-butyl (CH₃CH₂CH₂CH₂-), isobutyl ((CH₃)₂CHCH₂-), sec-butyl ((CH₃)(CH₃CH₂)CH-), tert-butyl ((CH₃)₃C-), n-pentyl (CH₃CH₂CH₂CH₂CH₂-), and neopentyl ((CH₃)₃CCH₂-).

"Perfluorosubstituted alkyl group" refers to replacement of all hydrogen atoms of carbon hydrogen bonds in an alkyl group with fluorine atoms, for example, perfluorosubstituted methyl (CF₃-), perfluorosubstituted ethyl (CF₃CF₂-), perfluorosubstituted n-propyl (CF₃CF₂CF₂-), or perfluorosubstituted isobutyl ((CF₃)₂CFCF₂-).

"Unsaturated double bond" refers to a bond formed by sharing two electron pairs between two atoms, for example, a carbon-carbon double bond (C=C), or a carbon-oxygen double bond (C=O).

Generally, a secondary battery includes a positive electrode plate, a negative electrode plate, an electrolyte solution, and a separator. During the charge/discharge of the battery, active ions are intercalated and deintercalated back and forth between the positive electrode plate and the negative electrode plate. An electrolyte in the electrolyte solution plays a role of conducting ions between the positive electrode plate and the negative electrode plate. The separator is arranged between the positive electrode plate and the negative electrode plate to prevent a short circuit between a positive electrode and a negative electrode while allowing ions to pass through, so that an electrochemical reaction of the secondary battery proceeds normally.

The secondary battery may include a lithium-ion battery, a sodium-ion battery, a magnesium-ion battery, or the like. This application takes a lithium-ion battery as an example. The lithium-ion battery is a typical secondary battery. Because of relying on a chemical reaction of deintercalation of lithium ions between the positive and negative electrodes for charging and discharging, the lithium-ion battery is also referred to as a rocking-chair battery. During charging of the lithium-ion battery, lithium ions are deintercalated from the positive electrode, moved, and intercalated into the negative electrode. During discharging, lithium ions are deintercalated from the negative electrode, moved, and intercalated into the positive electrode.

In recent years, secondary batteries have been greatly developed, and are widely used in a plurality of fields such as electric tools, electronic products, electric vehicles, and aerospace, and higher requirements have been placed on the volume capacity, energy density, and cycle performance of the secondary batteries.

During first charging of a secondary battery, a film-forming additive in the electrolyte solution is reduced on a surface of an electrode plate to form a solid electrolyte interphase (SEI) film. The SEI film can prevent a non-aqueous organic solvent in the electrolyte solution from being further decomposed, and form an ion channel in a subsequent charge-discharge cycle. However, as charging/discharging proceeds, the SEI film between the electrolyte solution and the electrode plate deteriorates in stability, gradually ruptures, and then regrows, causing the electrolyte solution to be continuously consumed, which affects the cycle stability and service life of the secondary battery.

In view of this, this application provides an electrolyte solution. The first additive includes at least one of compounds represented by formula (I) and formula (II). The compounds represented by formula (I) and formula (II) include a plurality of cyclic ester structures. The compounds have a large molecular structure, a large steric hindrance, and a weak solvation ability. Therefore, the compounds have low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery. Further, the compounds represented by formula (I) and formula (II) may include a cyclic carbonate structure and a cyclic sulfate structure and/or a cyclic sulfonate structure. In this way, the first additive undergoes a copolymerization reaction in the electrolyte solution and participates in film forming at the formation stage of the battery. A formed copolymer has advantages of a polycarbonate polymer and a polysulfate polymer and/or a polysulfonate polymer. The crystallinity of the copolymer is reduced, the toughness of the formed interface film is improved, and the stability of the interface film is improved, thereby prolonging the storage life of the battery. In addition, the electrolyte solution includes at least one of SO₂ and CO₂. SO₂ and CO₂ can change the bond breaking and forming form of the first additive in the formation stage, and inhibit the first additive from forming SO₂ and CO₂ in the formation stage, but form more inorganic-organic compact interface films containing sulfate, carbonate, and polycarbonate-polysulfate/polysulfonate, that is, the copolymer contains more sulfate and carbonate structures, so that the interface film is more compact, to better prevent co-intercalation of other molecules in the electrolyte solution, and avoid the damage to an electrode material caused by the co-intercalation of the other molecules, thereby further improving the cycle stability and storage life of the battery.

Hereinafter, a plurality of embodiments of this application are specifically introduced.

### [Electrolyte solution]

The electrolyte solution plays a role of conducting ions between the positive electrode plate and the negative electrode plate. The electrolyte solution provided in this application includes a first additive and a second additive. Specifically, the first additive includes at least one of compounds represented by the following formula (I) and formula (II): 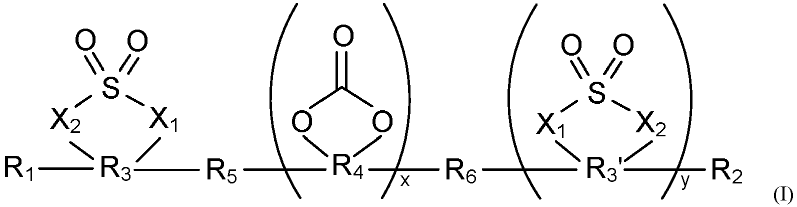 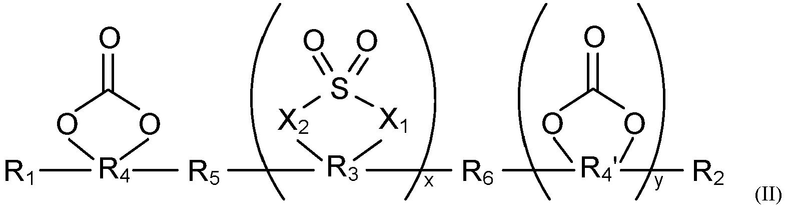 where x and y are each independently any natural number from 0 to 5, x + y ≥ 1, and X₁ and X₂ include O or CH₂ and X₁ and X₂ are not CH₂ simultaneously, R₃, R₄, R₃', and R₄' each independently include at least one of a saturated hydrocarbon group or an unsaturated hydrocarbon group, and R₅ and R₆ each independently include at least one of a saturated hydrocarbon group or an unsaturated hydrocarbon group having 1 to 6 carbon atoms, and a single bond; and the second additive includes at least one of SO₂ and CO₂.

Specifically, the compounds represented by formula (I) and formula (II) include a plurality of cyclic ester structures. Specifically, the compounds contain a cyclic carbonate structure and a cyclic sulfate structure and/or a cyclic sulfonate structure. The cyclic carbonate has a high dielectric constant and a high ionic conductivity, and can form a stable interface film on a surface of an electrode. The addition of the cyclic sulfate to the electrolyte solution can inhibit the decrease in the initial capacity of the battery, increase the initial discharge capacity, reduce the expansion of the battery after high-temperature standing, and improve the charge and discharge performance and cycle performance of the battery. The addition of the cyclic sulfonate to the electrolyte solution can form a stable interface film on the surface of the electrode. In the electrolyte solution, the compounds of formula (I) and/or formula (II) undergo a copolymerization reaction to form a copolymer having advantages of a polycarbonate polymer and a polysulfate polymer and/or polysulfonate.

Therefore, the electrolyte solution provided in the embodiments of the present disclosure includes a first additive and a second additive, and the first additive includes at least one of compounds represented by formula (I) and formula (II). The compounds represented by formula (I) and formula (II) include a plurality of cyclic ester structures. The compounds have a large molecular structure, a large steric hindrance, and a weak solvation ability. Therefore, the compounds have low interface reaction activity at an electrode plate and a low consumption rate in the electrolyte solution, and can continuously provide a film-forming substance for a battery to repair an interface film between the electrode plate and the electrolyte solution, thereby reducing the life decay rate of the battery in the middle and late stages of cycles and improving the cycle stability and service life of the battery. Further, the compounds represented by formula (I) and formula (II) may include a cyclic carbonate structure and a cyclic sulfate structure and/or a cyclic sulfonate structure. In this way, the first additive undergoes a copolymerization reaction in the electrolyte solution and participates in film forming at the formation stage of the battery. A formed copolymer has advantages of a polycarbonate polymer and a polysulfate polymer and/or a polysulfonate polymer. The crystallinity of the copolymer is reduced, the toughness of the formed interface film is improved, and the stability of the interface film is improved, thereby prolonging the storage life of the battery. In addition, the electrolyte solution includes at least one of SO₂ and CO₂. SO₂ and CO₂ can change the bond breaking and forming form of the first additive in the formation stage, and inhibit the first additive from forming SO₂ and CO₂ in the formation stage, but form more inorganic-organic compact interface films containing sulfate, carbonate, and polycarbonate-polysulfate/polysulfonate, that is, the copolymer contains more sulfate and carbonate structures, so that the interface film is more compact, to better prevent co-intercalation of other molecules in the electrolyte solution, and avoid the damage to an electrode material caused by the co-intercalation of the other molecules, thereby further improving the cycle stability and storage life of the battery.

Optionally, a value of x may be 0, 1, or 2, a value of y may be 0, 1, or 2, and x + y ≥ 1. For example, x = 0, and y = 1; x = 1, and y = 1; x = 2, and y = 1; x = 0, and y = 2; or x = 1, and y = 2.

Optionally, in some embodiments, a mass content of the second additive in the electrolyte solution is 10 ppm to 1000 ppm, and optionally, the mass content of the second additive in the electrolyte solution is 500 ppm to 800 ppm.

Specifically, the mass content of the second additive in the electrolyte solution may be 10 ppm, 20 ppm, 30 ppm, 40 ppm, 50 ppm, 60 ppm, 70 ppm, 80 ppm, 90 ppm, 100 ppm, 200 ppm, 300 ppm, 400 ppm, 500 ppm, 600 ppm, 700 ppm, 800 ppm, 900 ppm, or 1000 ppm, or a value within a range obtained by combining any two of the above values.

If the content of SO₂ and CO₂ is too low, the first additive cannot be effectively inhibited from forming SO₂ and CO₂ in the formation stage. If the content of SO₂ and CO₂ is too high, excessive sulfate ions and carbonate ions exist in the electrolyte solution, and may be combined with metal ions generated by the electrode material, reducing free metal ions in the electrolyte solution, affecting the performance of the battery.

Optionally, in some embodiments, a mass content of the first additive in the electrolyte solution is 0.0001% to 10%, and optionally, the mass content of the first additive in the electrolyte solution is 0.01% to 5%.

Specifically, the mass content of the first additive in the electrolyte solution may be 0.0001%, 0.0005%, 0.001%, 0.0015%, 0.002%, 0.0025%, 0.003%, 0.0035%, 0.004%, 0.0045%, 0.005%, 0.0055%, 0.006%, 0.0065%, 0.007%, 0.0075%, 0.008%, 0.0085%, 0.009%, 0.0095%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%, or a value within a range obtained by combining any two of the above values.

If the content of the first additive in the electrolyte solution is too low, no enough copolymer can be formed to participate in film forming, which affects the stability of the interface film, resulting in an unstable interface between the electrode plate and the electrolyte solution. If the content of the first additive in the electrolyte solution is too high, the viscosity of the electrolyte solution is too high, which affects the infiltration of the electrode plate by the electrolyte solution, and affects the charge and discharge performance of the battery.

Optionally, in some embodiments, R₁ and R₂ each independently include at least one of H, a halogen atom, a substituted hydrocarbon group or an unsubstituted hydrocarbon group, and a group containing an unsaturated double bond or triple bond.

In the embodiments of this application, a halogen atom is introduced into the compounds of formula (I) and formula (II) including a cyclic carbonate structure and a cyclic sulfate structure and/or a cyclic sulfonate structure, so that contents of inorganic components in the compounds can be increased to improve the insulativity of the interface film; a hydrocarbon group is introduced into the compounds, so that the stability of the compounds can be improved; and unsaturated double bonds are introduced into an end group of the compounds, so that the first additive has a multifunctional group structure, and is easier to form a crosslinked network structure in the film forming stage, which can better wrap the particle structure of the electrode material, and can inhibit the expansion of the electrode material, thereby further improving the cycle and storage performance.

Optionally, in some embodiments, R₁ and R₂ each independently include at least one of H, F, a straight-chain alkyl group or branched-chain alkyl group having 1 to 3 carbon atoms, a straight-chain perfluorosubstituted alkyl group or branched-chain perfluorosubstituted alkyl group having 1 to 3 carbon atoms, and a group having 1 to 3 carbon atoms and containing an unsaturated double bond.

In the embodiments of this application, the structures of the compounds of formula (I) and formula (II) are optimized by adjusting the number of carbon atoms of the groups introduced into the compounds of formula (I) and formula (II), so that the first additive has suitable solubility and viscosity in the electrolyte solution, and can better participate in film forming in the electrolyte solution, to improve the stability of the interface film between the electrode plate and the electrolyte solution.

Optionally, in some embodiments, R₅ and R₆ each independently include at least one of a saturated hydrocarbon group or an unsaturated hydrocarbon group having 1 to 3 carbon atoms.

In the embodiments of this application, if the number of carbon atoms of a hydrocarbon group structure among a plurality of ester groups is too large, the hydrocarbon group structure is too long, which affects the compactness of the electrode interface film formed by the first additive. The number of carbon atoms in R₅ and R₆ is adjusted, so that the length of the hydrocarbon group structure among the plurality of ester groups is suitable, so as to form an electrode interface film with a compact structure.

Optionally, in some embodiments, the first additive includes at least one of the following substances:

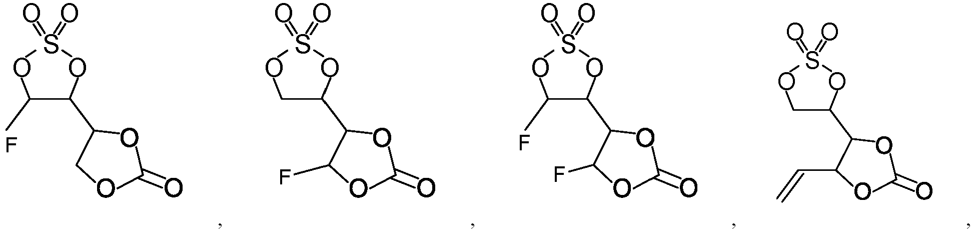

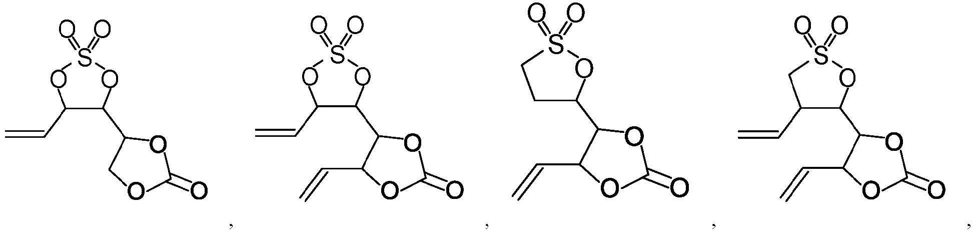

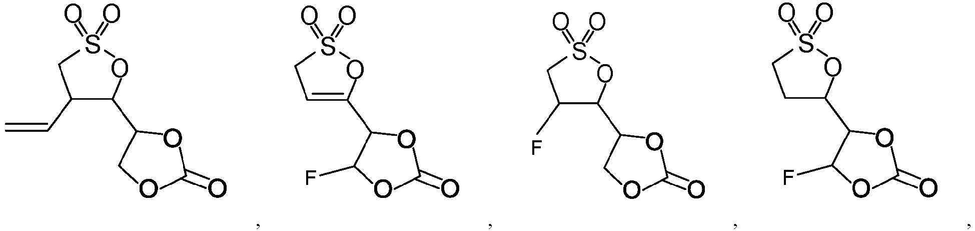

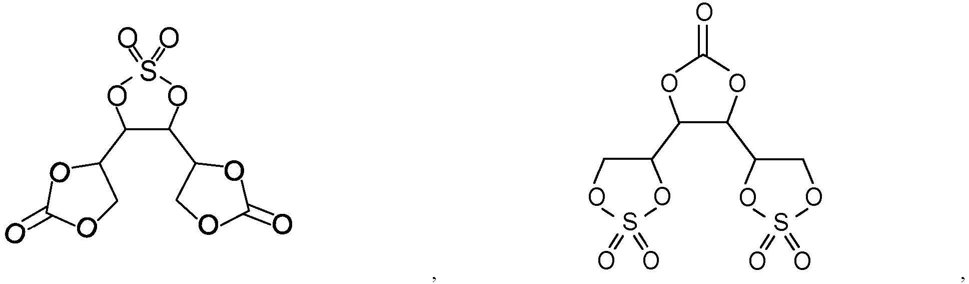

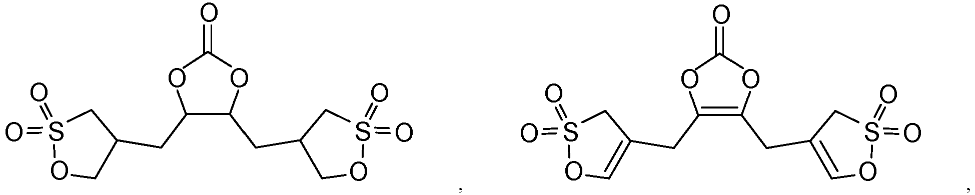

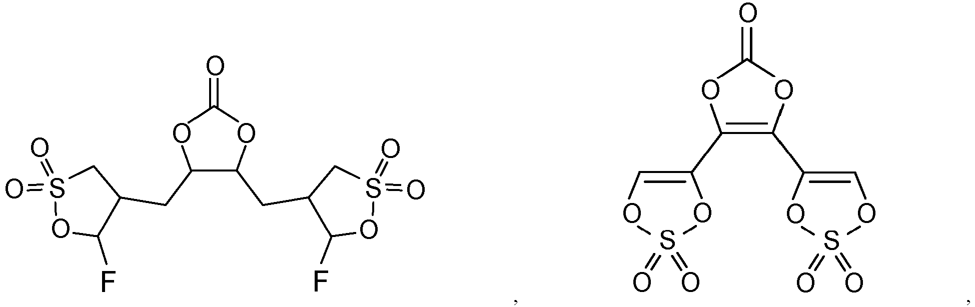

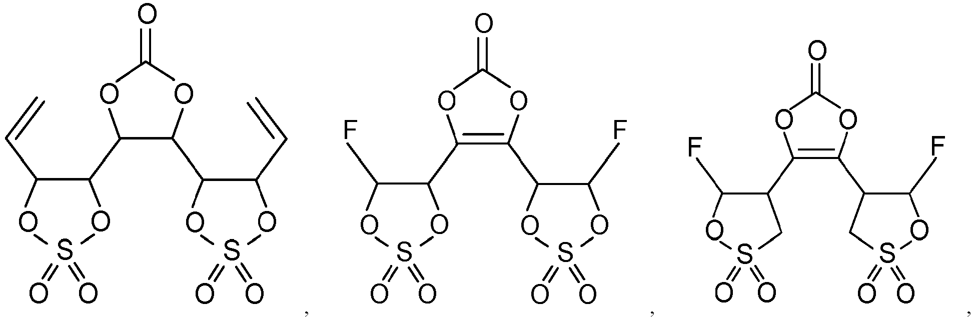

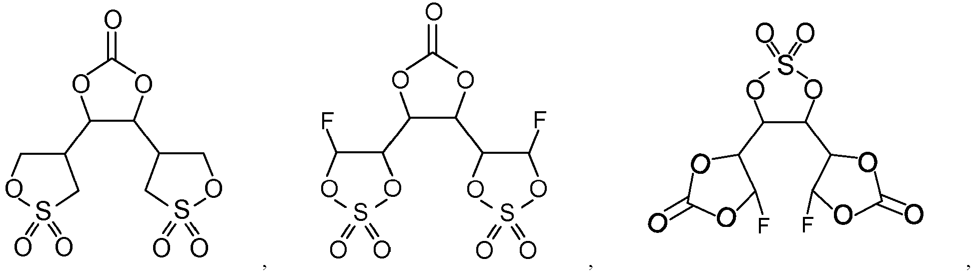

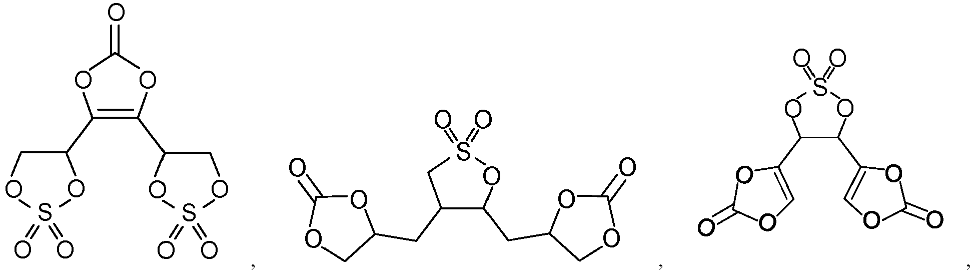

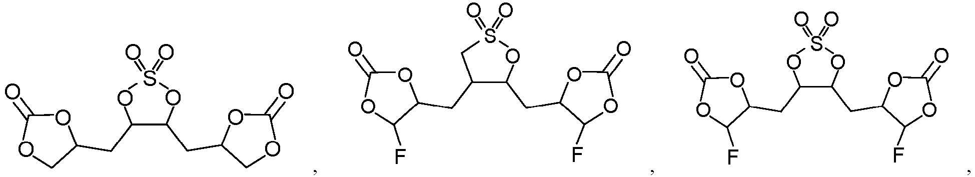

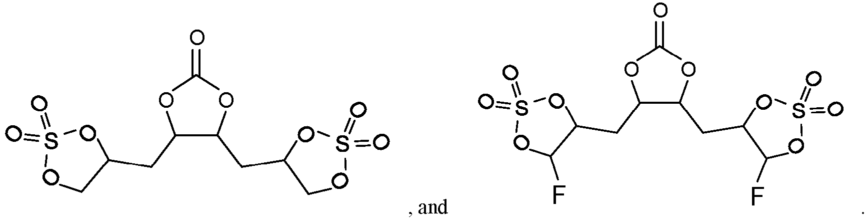

It should be understood that the various compounds of formula (I) and formula (II) provided in the embodiments of this application are merely examples, and should not be construed as a limitation on the compounds of this application.

In the embodiments of this application, a fluorine atom with the strongest electronegativity among halogens is selected to be introduced into a branch chain of the compounds of formula (I) and formula (II), which can further improve the stability and antioxidant performance of the compounds. Optionally, the groups R₁ and R₂ in the compounds of formula (I) and formula (II) are both fluorine atoms.

Optionally, in some embodiments, the electrolyte solution further includes a third additive, and the third additive includes at least one of carbonate and sulfate.

Specifically, the third additive includes at least one of vinylene carbonate (VC), difluoroethylene carbonate (DFEC), fluoroethylene carbonate (FEC), vinyl ethylene carbonate (VEC), ethylene sulfate (DTD), and bis(ethylene sulfate) (DTD-DTD).

It should be understood that the various compounds as the third additive provided in the embodiments of this application are merely examples, and should not be construed as a limitation on the third additive of this application.

In the formation stage of the battery, carbonate and sulfate form monomer reactive free radicals under an electrochemical reaction, thereby improving a reaction conversion rate of copolymerizing the first additive to form a copolymer. In this way, an interface film of the copolymer initially formed has a larger molecular weight and is more compact, which further improves the initial film-forming quality.

Optionally, in some embodiments, the electrolyte solution further includes a polymerization inhibitor, and optionally, the polymerization inhibitor includes at least one of hydroquinone and 2,6-di-tert-butyl-p-cresol.

It should be understood that the various compounds as the polymerization inhibitor provided in the embodiments of this application are merely examples, and should not be construed as a limitation on the polymerization inhibitor of this application.

Hydroquinone and 2,6-di-tert-butyl-p-cresol are added to the electrolyte solution to serve as a polymerization inhibitor, to reduce a risk of a chemical reaction between substances in the electrolyte solution under full contact during transportation of the battery, thereby reducing a risk of damaging components of the electrolyte solution.

Optionally, in some embodiments, a mass content of the polymerization inhibitor in the electrolyte solution is less than 20 ppm, and optionally, the mass content of the polymerization inhibitor in the electrolyte solution is less than 10 ppm.

Optionally, the mass content of the polymerization inhibitor in the electrolyte solution may be 15 ppm, 10 ppm, 5 ppm, 4 ppm, 3 ppm, 2 ppm, or 1 ppm.

The content of the polymerization inhibitor in the electrolyte solution is inadvisable to be too high. Otherwise, the copolymerization reaction of the first additive is inhibited, the film forming of the battery in the formation stage is affected, and a stable interface film cannot be formed between the electrode plate and the electrolyte solution. The content of the polymerization inhibitor is controlled, so that the film-forming quality of the battery in the formation stage is improved, thereby improving the service performance and service life of the battery.

Optionally, in some embodiments, the electrolyte solution further includes a solvent, and the solvent has a relative dielectric constant greater than 2 and a viscosity less than 2 mPa·s at 25°C.

Optionally, the relative dielectric constant of the solvent at 25°C may be 3, 4, 5, or 6; and the viscosity of the solvent at 25°C may be 1.5 mPa·s or 1 mPa·s.

If the relative dielectric constant of the solvent in the electrolyte solution is too small or the viscosity is too high, the additive is difficult to dissolve in the solvent.

Optionally, in some embodiments, the solvent includes at least one of carbonate, carboxylic acid ester, ether, sulfone, fluorocarbonate, fluorocarboxylate, fluoroether, and fluorosulfone.

The solvent of the electrolyte solution is usually an organic solvent such as carbonate, carboxylic acid ester, ether, or sulfone. The above organic solvent can improve infiltration performance of the electrolyte solution for the electrode plate, and has a high dielectric constant, which reduces the impedance of intercalating active ions into the electrode plate, improves the conductivity, and improves the cycle performance of the battery.

Optionally, in some embodiments, the electrolyte solution further includes a metal salt.

Taking a lithium-ion battery as an example, the electrolyte solution of the lithium-ion battery includes a lithium salt. Specifically, the lithium salt includes at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP), and optionally, the lithium salt includes at least one of LiPF₆ and LiFSI. The metal salt dissolves in the electrolyte solution to generate free metal ions, which move directionally between the positive and negative electrodes of the battery to conduct electricity.

The secondary battery may include a lithium-ion battery, a sodium-ion battery, a magnesium-ion battery, or the like. Correspondingly, the metal salt may be a lithium salt, a sodium salt, a magnesium salt, or the like. It should be understood that the various metal salts provided in the embodiments of this application are merely examples, and should not be construed as a limitation on the metal salt of this application.

Optionally, in some embodiments, an acidity value of the electrolyte solution is less than 800 ppm.

Optionally, the acidity value of the electrolyte solution may be 700 ppm, 650 ppm, 600 ppm, 550 ppm, or 500 ppm.

Specifically, the acidity value of the electrolyte solution refers to the mass content of hydrofluoric acid (HF) in the electrolyte solution, and the free HF in the electrolyte solution can be titrated with a standard solution, namely, a triethylamine solution.

If the acidity value of the electrolyte solution is too large, the first additive is likely to be unstable and degraded, making it difficult to form a copolymer and affecting the film-forming quality.

The following describes a battery cell, a battery, and a power consuming apparatus in this application with reference to the accompanying drawings.

An embodiment of this application further provides a battery cell. Generally, a battery cell includes a positive electrode plate, a negative electrode plate, an electrolyte solution, and a separator. During the charge/discharge of the battery, active ions are intercalated and deintercalated back and forth between the positive electrode plate and the negative electrode plate. An electrolyte in the electrolyte solution plays a role of conducting ions between the positive electrode plate and the negative electrode plate. The separator is arranged between the positive electrode plate and the negative electrode plate, mainly to prevent a short circuit between a positive electrode and a negative electrode while allowing ions to pass through.

It should be understood that the "intercalation" process described in this application refers to a process in which active ions are intercalated into a positive electrode active material or a negative electrode active material due to an electrochemical reaction, and the "deintercalation" or "deintercalating" process described in this application refers to a process in which active ions are deintercalated from the positive electrode active material or the negative electrode active material due to an electrochemical reaction.

### [Positive electrode plate]

The positive electrode plate includes a positive electrode current collector and a positive electrode film layer arranged on at least one surface of the positive electrode current collector, and the positive electrode film layer includes a positive electrode active material.

For example, the positive electrode current collector has two opposite surfaces in its own thickness direction, and the positive electrode film layer is arranged on either or both of the two opposite surfaces of the positive electrode current collector.

In some embodiments, the positive electrode current collector may be a metal foil or a composite current collector. For example, the metal foil may be an aluminum foil. The composite current collector may include a polymer material substrate and a metal layer formed on at least one surface of the polymer material substrate. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the positive electrode active material may be a positive electrode active material used for a lithium-ion battery and well known in the art. For example, the positive electrode active material may include at least one of the following materials: a lithium-containing phosphate of an olivine structure, a lithium transition metal oxide, and their respective modified compounds. However, this application is not limited to such materials, and may alternatively use other conventional materials that can be used as positive electrode active materials for lithium-ion batteries. Only one or a combination of two or more of these positive electrode active materials may be used. An example of the lithium transition metal oxide may include, but is not limited to, a lithium cobalt oxide (for example, LiCoO₂), a lithium nickel oxide (for example, LiNiO₂), a lithium manganese oxide (for example, LiMnO₂ or LiMn₂O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (also referred to as NCM333 for short), LiNi_{0.5}Co_{0.2}Mn_{0.3}O₂ (also referred to as NCM523 for short), LiNi_{0.5}Co_{0.25}Mn_{0.25}O₂ (also referred to as NCM211 for short), LiNi_{0.6}Co_{0.2}Mn_{0.2}O₂ (also referred to as NCM622 for short), or LiNi_{0.8}Co_{0.1}Mn_{0.1}O₂ (also referred to as NCM811 for short)), a lithium nickel cobalt aluminum oxide (for example, LiNi_{0.85}Co_{0.15}Al_{0.05}O₂), and modified compounds thereof. An example of the lithium-containing phosphate of the olivine structure may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by: dispersing the above components for preparing the positive electrode plate, for example, the positive electrode active material, the conductive agent, the binder, and any other components, in a solvent (for example, N-methylpyrrolidone) to form a positive electrode slurry; and coating a positive electrode current collector with the positive electrode slurry, followed by drying, cold pressing, and other processes, to obtain the positive electrode plate.

### [Negative electrode plate]

The negative electrode plate includes a negative electrode current collector and a negative electrode film layer arranged on at least one surface of the negative electrode current collector, and the negative electrode film layer includes a negative electrode active material.

For example, the negative electrode current collector has two opposite surfaces in its own thickness direction, and the negative electrode film layer is arranged on either or both of the two opposite surfaces of the negative electrode current collector.

In some embodiments, the negative electrode current collector may be a metal foil or a composite current collector. For example, a copper foil can be used as the metal foil. The composite current collector may include a polymer material substrate and a metal layer formed on at least one surface of the polymer material substrate. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material used for a battery and well known in the art. For example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon oxide, a silicon-carbon composite, a silicon-nitrogen composite, and a silicon alloy. The tin-based material may be selected from at least one of elemental tin, a tin oxide compound, and a tin alloy. However, this application is not limited to such materials, and may alternatively use other conventional materials that can be used as negative electrode active materials for batteries. Only one or a combination of two or more of these negative electrode active materials may be used.

In some embodiments, the negative electrode film layer optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer optionally includes another auxiliary agent such as a thickener (for example, sodium carboxymethyl cellulose (CMC-Na)).

In some embodiments, the negative electrode plate can be prepared by: dispersing the above components for preparing the negative electrode plate, for example, the negative electrode active material, the conductive agent, the binder, and any other components, in a solvent (for example, deionized water) to form a negative electrode slurry; and coating a negative electrode current collector with the negative electrode slurry, followed by drying, cold pressing, and other processes, to obtain the negative electrode plate.

### [Separator]

In some embodiments, the battery cell further includes a separator. There are no special limitations on a type of the separator in this application, and any well-known porous separator with good chemical stability and mechanical stability can be selected.

In some embodiments, a material of the separator may be selected from at least one of glass fiber, nonwoven fabric, polyethylene, polypropylene, and polyvinylidene fluoride. The separator can be a single-layer film or a multilayer composite film, without special limitations. When the separator is a multilayer composite film, materials of layers may be the same or different, without special limitations.

In some embodiments, an electrode assembly may be manufactured by a positive electrode plate, a negative electrode plate, and a separator through a winding process or a laminating process.

In some embodiments, the battery cell may include an outer packaging. The outer packaging can be used for packaging the above electrode assembly and electrolyte solution.

In some embodiments, the outer packaging of the battery cell may be a hard shell such as a hard plastic shell, an aluminum shell, or a steel shell. Alternatively, the outer packaging of the battery cell may be a soft package such as a pouch-type soft package. A material of the soft package may be plastic, and examples of plastic may include polypropylene, polybutylene terephthalate, polybutylene succinate, and the like.

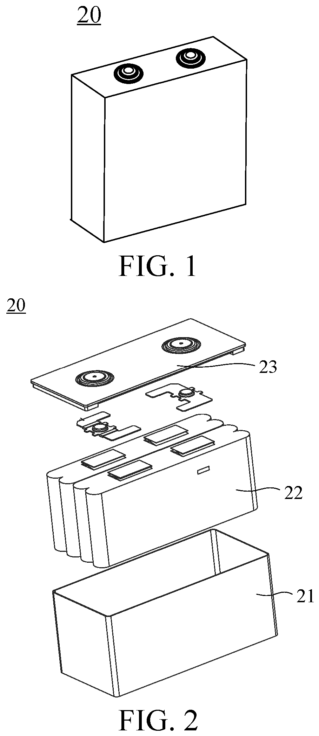

The shape of the battery cell is not particularly limited in this application, and the battery cell may be cylindrical, prismatic, or of any other shape. FIG. 1 shows a prismatic battery cell 20 as an example.

In some embodiments, referring to FIG. 2, an outer packaging may include a housing 21 and a cover plate 23. The housing 21 may include a bottom plate and a side plate connected to the bottom plate, and an accommodating cavity is defined by the bottom plate and the side plate. The housing 21 has an opening in communication with the accommodating cavity, and the cover plate 23 can cover the opening to close the accommodating cavity. An electrode assembly 22 may be formed by a positive electrode plate, a negative electrode plate, and a separator through a winding process or a laminating process. The electrode assembly 22 is enclosed in the accommodating cavity. An electrolyte solution infiltrates into the electrode assembly 22. The number of electrode assemblies 22 contained in the battery cell 20 may be one or more, and may be selected by a person skilled in the art according to actual requirements.

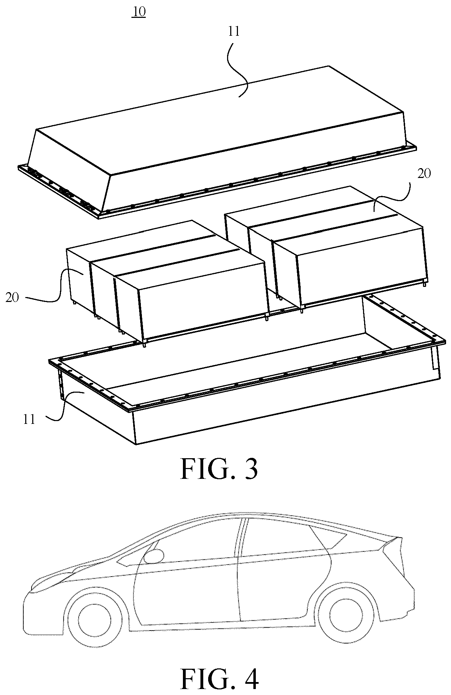

In some embodiments, a battery 10 may include a plurality of battery cells 20. For example, FIG. 3 is a schematic structural diagram of a battery 10 in an embodiment of this application. The battery 10 may include a plurality of battery cells 20. The battery 10 may further include a box 11. The box 11 has a hollow structure inside, and the plurality of battery cells 20 are accommodated in the box 11. For example, the plurality of battery cells 20 are connected in series, in parallel, or in series-parallel, and are then placed in the box 11.

Optionally, the battery 10 may further include other structures, which are not described one by one in detail herein. For example, the battery 10 may further include a bus component. The bus component is configured to implement electrical connection between the plurality of battery cells 20, such as parallel connection, series connection, or series-parallel connection. Specifically, the bus component can implement electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism passing through the box 11. Optionally, the electrically conductive mechanism may be part of the bus component.

According to different power requirements, the number of battery cells 20 can be set to any value. The plurality of battery cells 20 may be connected in series, in parallel, or in series-parallel to achieve large capacity or power. Since the number of battery cells 20 included in each battery 10 may be large, in order to facilitate mounting, the battery cells 20 may be arranged in groups, and each group of battery cells 20 constitutes a battery module. The number of battery cells 20 included in the battery module is not limited, and can be set according to requirements. The battery may include a plurality of battery modules, and the battery modules may be connected in series, in parallel, or in series-parallel.

In addition, this application further provides a power consuming apparatus. The power consuming apparatus includes at least one of the battery cell, the battery module, or the battery provided in this application. The battery cell, the battery module, or the battery may be used as a power source of the power consuming apparatus, or may be used as an energy storage unit of the power consuming apparatus. The power consuming apparatus may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

The battery cell, the battery module, or the battery may be selected according to use requirements of the power consuming apparatus.

FIG. 4 shows an example of a power consuming apparatus. The power consuming apparatus may be a pure electric vehicle, a hybrid electric vehicle, a plug-in hybrid electric vehicle, or the like. To meet requirements of the power consuming apparatus for high power and high energy density of a battery cell, a battery or a battery module may be used.

Another example of the apparatus may be a mobile phone, a tablet, a laptop, or the like. The apparatus usually needs to be light and thin, and the battery cell may be used as a power source.

### [Example]

The following describes examples of this application. The examples described below are exemplary and are only intended to explain this application, and cannot be understood as limitations on this application. If the specific technology or conditions are not specified in the examples, the technology or conditions described in the literature in this field or the product manual shall be followed. The reagents or instruments used without specifying the manufacturer are all conventional products that can be obtained through market procurement.

### (1) Preparation of compounds

### Preparation of compound 1

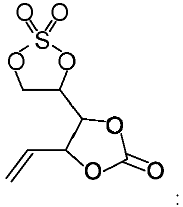

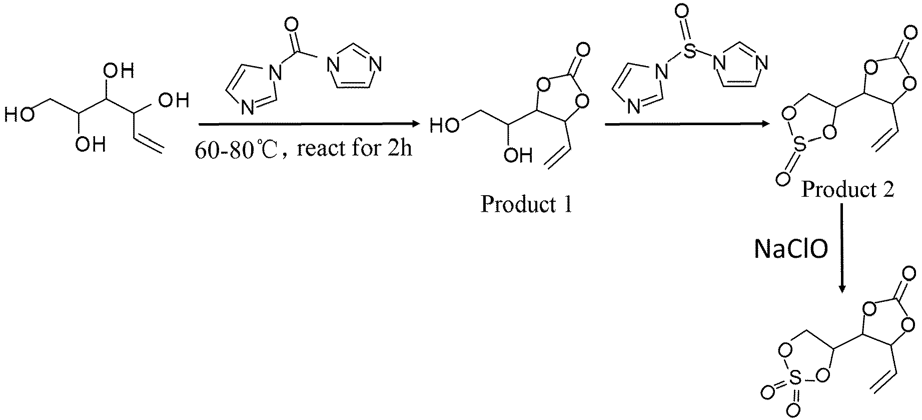

Specifically, in a three-neck flask, carbonyldiimidazole (1 mol) was added, acetonitrile was used as a solvent, 1,2,3,4-tetrahydroxy-hexene (1.1 mol) was added, and the reaction was performed at a reaction temperature of 60°C to 80°C for 2 h. After the reaction was completed, excess raw materials were precipitated to obtain a reaction solution of product 1. 1 mol of sulfinyldiimidazole was added to the reaction solution of product 1, and the materials were mixed at a reaction temperature of 20°C to 40°C. After the mixing of the materials was completed, stirring was performed at room temperature overnight. The reaction solution was concentrated, extracted with ethyl acetate, washed with water three times, and concentrated to obtain product 2. Product 2 (1 mol) was added to acetonitrile, ruthenium trichloride (0.2 g) was added, the system was replaced with nitrogen, and the reaction temperature was 15°C to 25°C. 10% sodium hypochlorite aqueous solution (1.1 eq) was added dropwise over a period of 1 h, the mixture was kept warm for 10 minutes after dropwise addition, and the liquids were separated. After the reaction was completed, the reaction solution was washed with saturated sodium sulfite aqueous solution until the potassium iodide starch test paper did not turn blue, washed once with deionized water, and dried with anhydrous sodium sulfate. After filtration and concentration, recrystallization is performed with acetonitrile, to obtain compound 1.

### Preparation of compound 2

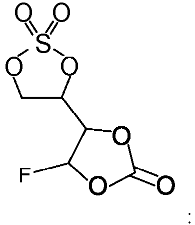

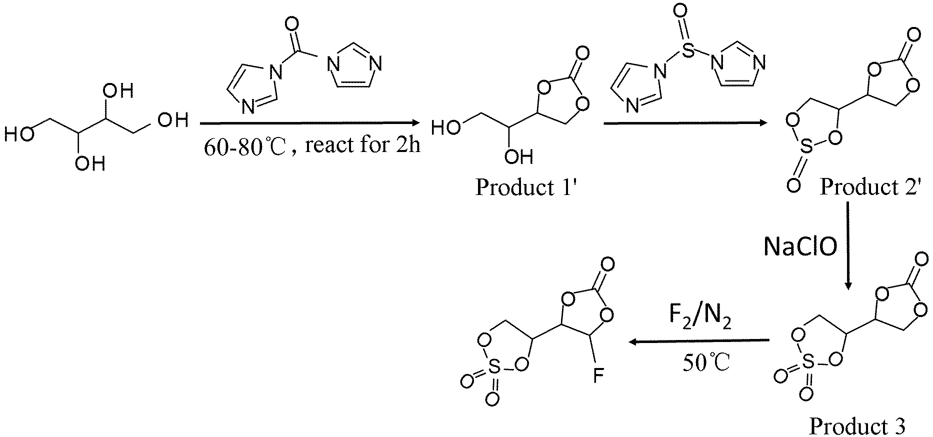

Specifically, in a three-neck flask, carbonyldiimidazole (1 mol) was added, acetonitrile was used as a solvent, erythritol (1.1 mol) was added, and the reaction was performed at a reaction temperature of 60°C to 80°C for 2 h. After the reaction was completed, excess raw materials were precipitated to obtain a reaction solution of product 1'. 1 mol of sulfinyldiimidazole was added to the reaction solution of product 1', and the materials were mixed at a reaction temperature of 20°C to 40°C. After the mixing of the materials was completed, stirring was performed at room temperature overnight. The reaction solution was concentrated, extracted with ethyl acetate, washed with water three times, and concentrated to obtain product 2'. Product 2' (1 mol) was added to acetonitrile, ruthenium trichloride (0.2 g) was added, the system was replaced with nitrogen, and the reaction temperature was 15°C to 25°C. 10% sodium hypochlorite aqueous solution (1.1 eq) was added dropwise over a period of 1 h, the mixture was kept warm for 10 minutes after dropwise addition, and the liquids were separated. After the reaction was completed, the reaction solution was washed with saturated sodium sulfite aqueous solution until the potassium iodide starch test paper did not turn blue, washed once with deionized water, and dried with anhydrous sodium sulfate. After filtration and concentration, recrystallization is performed with acetonitrile, to obtain product 3. Product 3 was added into a PFA reaction tank, fluorine/nitrogen (a volume ratio of fluorine to nitrogen is 3:7) was introduced at 50°C, gassing was performed at a rate of 350 ml/min, and after reacting for 0.5 h, column chromatography separation was performed on the compound to obtain compound 2.

### Preparation of compound 3

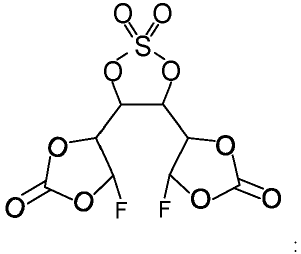

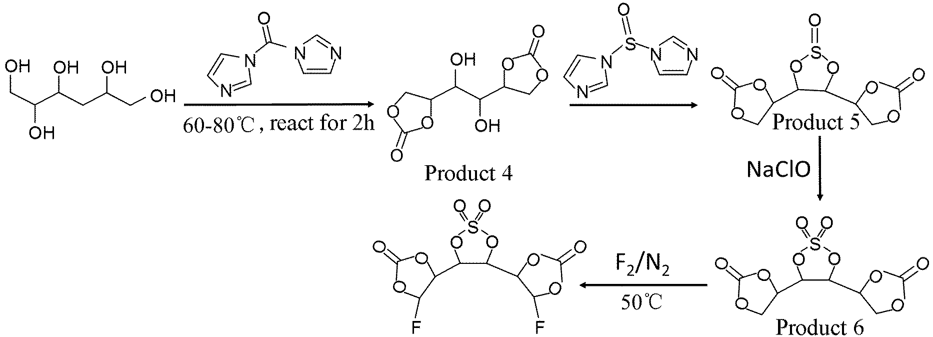

Specifically, in a three-neck flask, carbonyldiimidazole (2 eq) was added, acetonitrile was used as a solvent, 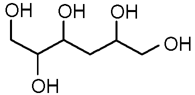 (1.1 mol) was added, and the reaction was performed at a reaction temperature of 60°C to 80°C for 2 h. After the reaction was completed, excess raw materials were precipitated to obtain a reaction solution of product 4. 1 mol of sulfinyldiimidazole was added to the reaction solution of product 4, and the materials were mixed at a reaction temperature of 20°C to 40°C. After the mixing of the materials was completed, stirring was performed at room temperature overnight. The reaction solution was concentrated, extracted with ethyl acetate, washed with water three times, and concentrated to obtain product 5. Product 5 (1 mol) was added to acetonitrile, ruthenium trichloride (0.2 g) was added, the system was replaced with nitrogen, and the reaction temperature was 15°C to 25°C. 10% sodium hypochlorite aqueous solution (1.1 eq) was added dropwise over a period of 1 h, the mixture was kept warm for 10 minutes after dropwise addition, and the liquids were separated. After the reaction was completed, the reaction solution was washed with saturated sodium sulfite aqueous solution until the potassium iodide starch test paper did not turn blue, washed once with deionized water, and dried with anhydrous sodium sulfate. After filtration and concentration, recrystallization is performed with acetonitrile, to obtain product 6. Product 6 was added into a PFA reaction tank, fluorine/nitrogen (a volume ratio of fluorine to nitrogen is 3:7) was introduced at 50°C, gassing was performed at a rate of 350 ml/min, and after reacting for 0.5 h, column chromatography separation was performed on the compound to obtain compound 3.

### Preparation of compound 4

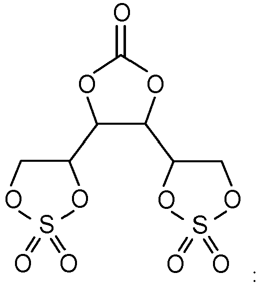

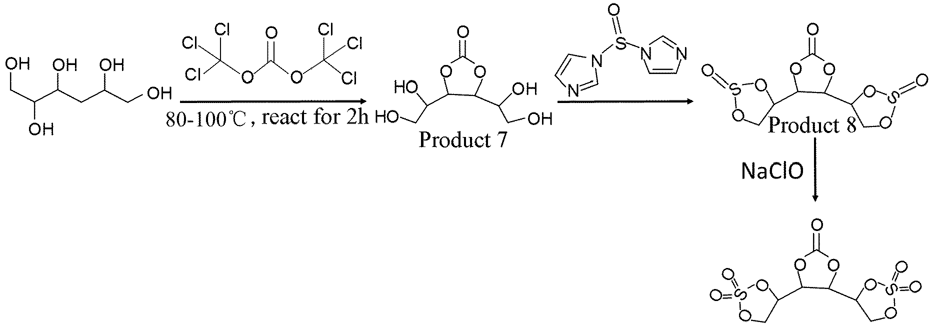

Specifically, in a three-neck flask, 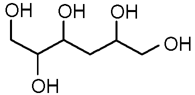 was added, acetonitrile was used as a solvent, triphosgene (1.1 mol) was added, and the reaction was performed at a reaction temperature of 80 to 100°C for 2 h. After the reaction was completed, excess raw materials were precipitated, and concentrated under reduced pressure to obtain product 7. Sulfinyldiimidazole (2 eq) was added to the solution of product 7 and acetonitrile, and the materials were mixed at a reaction temperature of 20°C to 40°C. After the mixing of the materials was completed, stirring was performed at room temperature overnight. The reaction solution was concentrated, extracted with ethyl acetate, washed with water three times, and concentrated to obtain product 8. Product 8 (1 mol) was added to acetonitrile, ruthenium trichloride (0.2 g) was added, the system was replaced with nitrogen, and the reaction temperature was 15°C to 25°C. 10% sodium hypochlorite aqueous solution (2.2 eq) was added dropwise over a period of 1 h, the mixture was kept warm for 10 minutes after dropwise addition, and the liquids were separated. After the reaction was completed, the reaction solution was washed with saturated sodium sulfite aqueous solution until the potassium iodide starch test paper did not turn blue, washed once with deionized water, and dried with anhydrous sodium sulfate. After filtration and concentration, recrystallization is performed with acetonitrile, to obtain compound 4.

### Preparation of compound 5

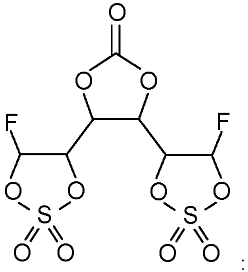

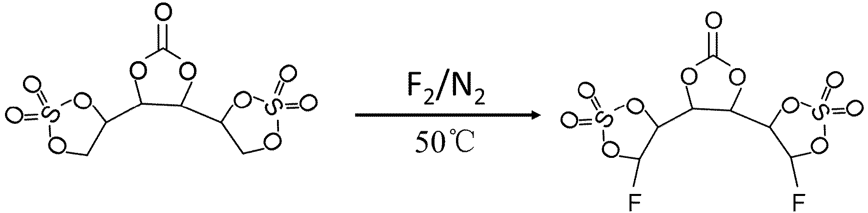

Specifically, on the basis of preparing compound 4, compound 4 was added into a PFA reaction tank, fluorine/nitrogen (a volume ratio of fluorine to nitrogen is 3:7) was introduced at 50°C, gassing was performed at a rate of 350 ml/min, and after reacting for 0.5 h, column chromatography separation was performed on the compound to obtain compound 5.

(2) Preparation of electrolyte solution: In an argon atmosphere glove box (H₂O<0.1 ppm and O₂<0.1 ppm), organic solvents EC and EMC were uniformly mixed in a volume ratio of 3:7, and 1M lithium hexafluorophosphate (LiPF₆) was added and dissolved in the organic solvent, the first additive and the second additive were added and dissolved in the organic solvent, and stirring is performed uniformly to obtain the corresponding electrolyte solution.

(3) Preparation of positive electrode plate: The positive electrode active material LiNi_{0.5}Mn_{0.38}Co_{0.12}O₂, acetylene black as the conductive agent, and polyvinylidene fluoride (PVDF) as the binder were dissolved in a solvent N-methylpyrrolidone (NMP) at a weight ratio of 96:2:2, and stirring and mixing were performed fully to obtain a positive electrode slurry. The positive electrode current collector was then uniformly coated with the positive electrode slurry, followed by drying, cold pressing, and slitting to obtain the positive electrode plate.

(4) Preparation of negative electrode plate: Artificial graphite as the active material, acetylene black as the conductive agent, styrene-butadiene rubber (SBR) as the binder, and sodium carboxymethyl cellulose (CMC) as the thickener were dissolved in the solvent deionized water at a weight ratio of 96:1.5:1.5:1 and uniformly mixed with the solvent deionized water, to prepare a negative electrode slurry. After that, a copper foil as the negative electrode current collector was coated uniformly with the negative electrode slurry, and was dried to obtain a negative electrode film. The negative electrode film was then cold-pressed and slit to obtain a negative electrode plate.

(5) Preparation of separator: A conventional polypropylene film was used as a separator.

(6) Assembly of lithium-ion battery: The positive electrode plate, the separator, and the negative electrode plate were stacked in sequence, to cause the separator to isolate the positive electrode plate and the negative electrode plate from each other. The positive electrode plate, the separator, and the negative electrode plate were then wound to obtain an electrode assembly. The electrode assembly was placed in a battery housing and dried, and after that, the electrolyte solution was injected into the battery housing, and then processes such as formation and standing were performed to obtain a lithium-ion battery.

### [Comparative example 1]

The first additive was compound 1. According to the above method for preparing an electrolyte solution, an electrolyte solution 1' containing compound 1 was prepared, and a mass content of compound 1 in the electrolyte solution 1' was 1%. Then according to the above method for assembling a lithium-ion battery, a lithium-ion battery 1' containing the electrolyte solution 1' was prepared, corresponding to comparative example 1.

### [Comparative example 2]

The first additive was compound 2. According to the above method for preparing an electrolyte solution, an electrolyte solution 2' containing compound 2 was prepared, and a mass content of compound 2 in the electrolyte solution 2' was 1%. Then according to the above method for assembling a lithium-ion battery, a lithium-ion battery 2' containing the electrolyte solution 2' was prepared, corresponding to comparative example 2.

### [Comparative example 3]

The first additive was compound 3. According to the above method for preparing an electrolyte solution, an electrolyte solution 3' containing compound 3 was prepared, and a mass content of compound 3 in the electrolyte solution 3' was 1%. Then according to the above method for assembling a lithium-ion battery, a lithium-ion battery 3' containing the electrolyte solution 3' was prepared, corresponding to comparative example 3.

### [Comparative example 4]

The first additive was compound 4. According to the above method for preparing an electrolyte solution, an electrolyte solution 4' containing compound 4 was prepared, and a mass content of compound 4 in the electrolyte solution 4' was 1%. Then according to the above method for assembling a lithium-ion battery, a lithium-ion battery 4' containing the electrolyte solution 4' was prepared, corresponding to comparative example 4.

### [Comparative example 5]

The first additive was compound 5. According to the above method for preparing an electrolyte solution, an electrolyte solution 5' containing compound 5 was prepared, and a mass content of compound 5 in the electrolyte solution 5' was 1%. Then according to the above method for assembling a lithium-ion battery, a lithium-ion battery 5' containing the electrolyte solution 5' was prepared, corresponding to comparative example 5.

### [Comparative example 6-1]

Comparative example 6-1 was different from comparative example 3 in that on the basis of comparative example 3, SO₂ with a mass content of 5 ppm was further added, and a lithium-ion battery 6-1 was prepared, corresponding to comparative example 6-1.

### [Comparative example 6-2]

Comparative example 6-2 was different from comparative example 3 in that on the basis of comparative example 3, CO₂ with a mass content of 5 ppm was further added, and a lithium-ion battery 6-2 was prepared, corresponding to comparative example 6-2.

### [Comparative example 7-1]

Comparative example 7-1 was different from comparative example 3 in that on the basis of comparative example 3, SO₂ with a mass content of 1200 ppm was further added, and a lithium-ion battery 7-1 was prepared, corresponding to comparative example 7-1.

### [Comparative example 7-2]

Comparative example 7-2 was different from comparative example 3 in that on the basis of comparative example 3, CO₂ with a mass content of 1200 ppm was further added, and a lithium-ion battery 7-2 was prepared, corresponding to comparative example 7-2.

### [Comparative example 8]

The first additive was DTD. According to the above method for preparing an electrolyte solution, an electrolyte solution 8' containing DTD was prepared, and a mass content of DTD in the electrolyte solution 8' was 1%. Then according to the above method for assembling a lithium-ion battery, a lithium-ion battery 8' containing the electrolyte solution 8' was prepared, corresponding to comparative example 8.

### [Comparative example 9]

The first additive was VC. According to the above method for preparing an electrolyte solution, an electrolyte solution 9' containing VC was prepared, and a mass content of VC in the electrolyte solution 9' was 1%. Then according to the above method for assembling a lithium-ion battery, a lithium-ion battery 9' containing the electrolyte solution 9' was prepared, corresponding to comparative example 9.

### [Comparative example 10]

The first additive included DTD and VC. According to the above method for preparing an electrolyte solution, an electrolyte solution 10' containing DTD and VC was prepared, and a total mass content of DTD and VC in the electrolyte solution 10' was 1%. Then according to the above method for assembling a lithium-ion battery, a lithium-ion battery 10' containing the electrolyte solution 10' was prepared, corresponding to comparative example 10.

### [Example 1]

The first additive was compound 1, and the second additive was SO₂. According to the above method for preparing an electrolyte solution, an electrolyte solution 1 containing compound 1 and SO₂ was prepared, a mass content of compound 1 in the electrolyte solution 1 was 1%, and a mass content of SO₂ in the electrolyte solution 1 was 100 ppm. Then according to the above method for assembling a lithium-ion battery, a lithium-ion battery 1 containing the electrolyte solution 1 was prepared, corresponding to example 1.

### [Example 2]

Example 2 was different from example 1 in that the first additive was compound 2, corresponding to example 2.

### [Example 3-1]

Example 3-1 was different from example 1 in that the first additive was compound 3, corresponding to example 3-1.

### [Example 3-2]

Example 3-2 was different from example 3-1 in that the second additive was CO₂, corresponding to example 3-2.

### [Example 4]

The first additive was compound 4, and the second additive was CO₂. According to the above method for preparing an electrolyte solution, an electrolyte solution 4 containing compound 1 and CO₂ was prepared, a mass content of compound 4 in the electrolyte solution 4 was 1%, and a mass content of CO₂ in the electrolyte solution 4 was 100 ppm. Then according to the above method for assembling a lithium-ion battery, a lithium-ion battery 4 containing the electrolyte solution 4 was prepared, corresponding to example 4.

### [Example 5]

Example 5 was different from example 4 in that the first additive was compound 5, corresponding to example 5.

### [Examples 6 and 7]

Examples 6 and 7 were different from example 3-1 in that the mass contents of compound 3 in the electrolyte solutions were different, and in the prepared electrolyte solution 6 and electrolyte solution 7, the mass contents of compound 3 were 10% and 0.0001% respectively. Then according to the above method for assembling a lithium-ion battery, a lithium-ion battery 6 containing the electrolyte solution 6 and a lithium-ion battery 7 containing the electrolyte solution 7 were prepared, corresponding to examples 6 and 7 respectively.

### [Examples 8-1, 9-1, 10-1, 11-1, 12-1, and 13-1]

Examples 8-1, 9-1, 10-1, 11-1, 12-1, and 13-1 were different from example 3-1 in that the mass contents of SO₂ in the electrolyte solutions were different, the mass contents of SO₂ in the prepared electrolyte solution 8-1, electrolyte solution 9-1, electrolyte solution 10-1, electrolyte solution 11-1, electrolyte solution 12-1, and electrolyte solution 13-1 were 10 ppm, 20 ppm, 300 ppm, 500 ppm, 800 ppm, and 1000 ppm respectively, and lithium-ion batteries 8-1, 9-1, 10-1, 11-1, 12-1, and 13-1 were prepared, corresponding to examples 8-1, 9-1, 10-1, 11-1, 12-1, and 13-1 respectively.

### [Examples 8-2, 9-2, 10-2, 11-2, 12-2, and 13-2]

Examples 8-2, 9-2, 10-2, 11-2, 12-2, and 13-2 were different from example 3-2 in that the mass contents of CO₂ in the electrolyte solutions were different, the mass contents of CO₂ in the prepared electrolyte solution 8-2, electrolyte solution 9-2, electrolyte solution 10-2, electrolyte solution 11-2, electrolyte solution 12-2, and electrolyte solution 13-2 were 10 ppm, 20 ppm, 300 ppm, 500 ppm, 800 ppm, and 1000 ppm respectively, and lithium-ion batteries 8-2, 9-2, 10-2, 11-2, 12-2, and 13-2 were prepared, corresponding to examples 8-2, 9-2, 10-2, 11-2, 12-2, and 13-2 respectively.

### [Example 14]

Example 14 was different from example 9 in that on the basis of example 9, benzenediol with a mass content of 5 ppm was further added as a polymerization inhibitor, and a lithium-ion battery 14 was prepared, corresponding to example 14.

### [Example 15]

Example 15 was different from example 10 in that on the basis of example 10, difluoroethylene carbonate (DFEC) with a mass content of 1% was further added as a polymerization inhibitor, and a lithium-ion battery 15 was prepared, corresponding to example 15.

### [Example 16]

Example 16 was different from example 9 in that on the basis of example 9, benzenediol with a mass content of 25 ppm was further added as a polymerization inhibitor, and a lithium-ion battery 16 was prepared, corresponding to example 16.

Details of product parameters of different examples were shown in Table 1.

**Table 1: Product parameters of comparative examples and different examples**

| Serial number | First additive | Mass content of first additive /% | Mass content of SO₂ /ppm | Mass content of CO₂ /ppm | Mass content of polymerization inhibitor /ppm | Mass content of third additive | Acidity value of electrolyte solution /ppm |
|---|---|---|---|---|---|---|---|
| Comparative example 1 | Compound 1 | 1 | / | / | / | / | 18 |
| Comparative example 2 | Compound 2 | 1 | / | / | / | / | 18 |
| Comparative example 3 | Compound 3 | 1 | / | / | / | / | 18 |
| Comparative example 4 | Compound 4 | 1 | / | / | / | / | 18 |
| Comparative example 5 | Compound 5 | 1 | / | / | / | / | 18 |
| Comparative example 6-1 | Compound 3 | 1 | 5 | / | / | / | 18 |
| Comparative example 6-2 | Compound 3 | 1 | / | 5 | / | / | 18 |
| Comparative example 7-1 | Compound 3 | 1 | 1200 | / | / | / | 18 |
| Comparative example 7-2 | Compound 3 | 1 | / | 1200 | / | / | 18 |
| Comparative example 8 | DTD | 1 | / | / | / | / | 18 |
| Comparative example 9 | VC | 1 | / | / | / | / | 18 |
| Comparative example 10 | DTD+VC | 1 | / | / | / | / | 18 |
| Example 1 | Compound 1 | 1 | 100 | / | / | / | 18 |
| Example 2 | Compound 2 | 1 | 100 | / | / | / | 18 |
| Example 3-1 | Compound 3 | 1 | 100 | / | / | / | 18 |
| Example 3-2 | Compound 3 | 1 | / | 100 | / | / | 18 |
| Example 4 | Compound 4 | 1 | / | 100 | / | / | 18 |
| Example 5 | Compound 5 | 1 | / | 100 | / | / | 18 |
| Example 6 | Compound 3 | 10 | 100 | / | / | / | 18 |
| Example 7 | Compound 3 | 0.0001 | 100 | / | / | / | 18 |
| Example 8-1 | Compound 3 | 1 | 10 | / | / | / | 18 |
| Example 8-2 | Compound 3 | 1 | / | 10 | / | / | 18 |
| Example 9-1 | Compound 3 | 1 | 20 | / | / | / | 18 |
| Example 9-2 | Compound 3 | 1 | / | 20 | / | / | 18 |
| Example 10-1 | Compound 3 | 1 | 300 | / | / | / | 18 |
| Example 10-2 | Compound 3 | 1 | / | 300 | / | / | 18 |
| Example 11-1 | Compound 3 | 1 | 500 | / | / | / | 18 |
| Example 11-2 | Compound 3 | 1 | / | 500 | / | / | 18 |
| Example 12-1 | Compound 3 | 1 | 800 | / | / | / | 18 |
| Example 12-2 | Compound 3 | 1 | / | 800 | / | / | 18 |
| Example 13-1 | Compound 3 | 1 | 1000 | / | / | / | 18 |
| Example 13-2 | Compound 3 | 1 | / | 1000 | / | / | 18 |
| Example 14 | Compound 3 | 1 | 20 | / | 5 | / | 18 |
| Example 15 | Compound 3 | 1 | 20 | / | 5 | DFEC, 1% | 18 |
| Example 16 | Compound 3 | 1 | 20 | / | 25 | / | 18 |

Next, the test processes of the relevant parameters are described.

### 1. Test of storage performance of lithium-ion battery

At 25°C, the lithium-ion battery was charged to 4.5 V at a constant current of 0.5 C, and then charged at a constant voltage of 4.5 V until the current was less than 0.05 C. Then the lithium-ion battery was stored at 60°C, and taken out every 5 days for full charge and then stored. When the capacity decayed to 80%, the test was stopped, and the high-temperature storage time was recorded.

### 2. Test of cycle performance of lithium-ion battery

At 45°C, the lithium-ion battery was charged to 4.5 V at a constant current of 1 C, and then charged at a constant voltage of 4.5 V until the current was less than 0.05 C. Then the lithium-ion battery was discharged to 2.8 V at a constant current of 1 C. This is a charge and discharge process. The charging and discharging were repeated in this way, and the number of cycles was calculated when the capacity retention rate of the lithium-ion was 80%.

Capacity retention rate (%) of the lithium-ion battery after n cycles = (discharge capacity after the nth cycle/discharge capacity after the first cycle)×100%.

Battery performance tests were performed on the prepared comparative examples 1-10 and examples 1-16 respectively according to the above methods, and details of results were shown in Table 2.

**Table 2: Performance test results of comparative examples and different examples**

| Serial number | Number of cycles with a capacity retention rate of 80% at 45°C | Total number of storage days when the capacity decayed from the initial state to 80% at 60°C |
|---|---|---|
| Comparative example 1 | 520 | 90 |
| Comparative example 2 | 539 | 100 |
| Comparative example 3 | 639 | 110 |
| Comparative example 4 | 658 | 120 |
| Comparative example 5 | 660 | 125 |
| Comparative example 6-1 | 644 | 110 |
| Comparative example 6-2 | 638 | 110 |
| Comparative example 7-1 | 689 | 115 |
| Comparative example 7-2 | 687 | 115 |
| Comparative example 8 | 60 | 15 |
| Comparative example 9 | 48 | 10 |
| Comparative example 10 | 65 | 15 |
| Example 1 | 830 | 150 |
| Example 2 | 845 | 155 |
| Example 3-1 | 899 | 160 |
| Example 3-2 | 886 | 160 |
| Example 4 | 905 | 165 |
| Example 5 | 934 | 170 |
| Example 6 | 877 | 155 |
| Example 7 | 602 | 105 |
| Example 8-1 | 705 | 125 |
| Example 8-2 | 701 | 125 |
| Example 9-1 | 768 | 135 |
| Example 9-2 | 745 | 130 |
| Example 10-1 | 911 | 165 |
| Example 10-2 | 908 | 165 |
| Example 11-1 | 932 | 170 |
| Example 11-2 | 928 | 170 |
| Example 12-1 | 933 | 170 |
| Example 12-2 | 927 | 170 |
| Example 13-1 | 898 | 160 |
| Example 13-2 | 895 | 160 |
| Example 14 | 834 | 150 |
| Example 15 | 903 | 160 |
| Example 16 | 740 | 130 |

It can be seen from comparison between the results of each of comparative examples 1 to 5 and each of examples 1 to 5 that the compound including both a cyclic carbonate structure and a cyclic sulfate structure and provided in this application and the second additive SO₂ or CO₂ are added to the electrolyte solution, so that the cycle performance of the lithium-ion battery is significantly improved, and the decay rate of the cycle performance of the lithium-ion battery at high temperature is significantly reduced, thereby prolonging the service life of the lithium-ion battery and also prolonging the storage life of the lithium-ion battery.

It can be seen from comparison between the results of examples 1 to 5 that a cyclic carbonate structure or a cyclic sulfate structure is appropriately added to the structure of the compound, so that the interface film formed by the copolymerization of the compound has better performance, which can further improve the cycle performance, service life, and storage life of the lithium-ion battery.

It can be seen from comparison between the results of example 3-1 and examples 6 and 7 that the mass content of the first additive in the electrolyte solution should be neither too high nor too low, and the mass content of the first additive in the electrolyte solution is controlled within an appropriate range, so that the cycle stability, service life, and storage life of the battery can be further improved.

It can be seen from comparison between the results of comparative examples 6-1, 6-2, 7-2, and 7-2 and examples 3-1, 3-2, and 8-1 to 13-2 that the addition of an appropriate amount of second additive SO₂ or CO₂ to the electrolyte solution can facilitate forming of an inorganic-organic compact interface film containing sulfate/carbonate, and polycarbonate-polysulfate, and the interface film is more compact, to better prevent co-intercalation of other molecules in the electrolyte solution, and avoid the damage to an electrode material caused by the co-intercalation of the other molecules, thereby improving the cycle performance, service life, and storage life of the lithium-ion battery.

It can be seen from comparison between the results of example 9-1 and examples 14 and 16 that an appropriate amount of polymerization inhibitor is added to the electrolyte solution, to prevent a chemical reaction from occurring between substances in the electrolyte solution under full contact during transportation of the battery to damage components of the electrolyte solution, thereby improving the cycle performance and service life of the lithium-ion battery; and an excessive amount of polymerization inhibitor affects the copolymerization reaction of the first additive, and affects the film forming of the battery in the formation stage, so that a stable interface film cannot be formed between the electrode plate and the electrolyte solution.

It can be seen from comparison between the results of example 14 and example 15 that DFEC is added to the electrolyte solution, and DFEC forms monomer reactive free radicals under an electrochemical reaction, thereby improving a reaction conversion rate of copolymerizing the first additive to form a copolymer. In this way, an interface film of the copolymer initially formed has a larger molecular weight and is more compact, which can improve the cycle performance, service life, and storage life of the lithium-ion battery.

It should be noted that this application is not limited to the foregoing embodiments. The foregoing embodiments are exemplary only, and any embodiment having substantially the same technical idea and the same effects within the scope of the technical solutions of this application shall fall within the technical scope of this application. In addition, other embodiments obtained by making various modifications that can be conceived by a person skilled in the art to the embodiments or obtained by combining some of the constituent elements of the embodiments without departing from the scope of the subject matter of this application shall also fall within the scope of this application.

## Claims

1. An electrolyte solution, comprising:
a first additive, wherein the first additive comprises at least one of compounds represented by formula (I) and formula (II): 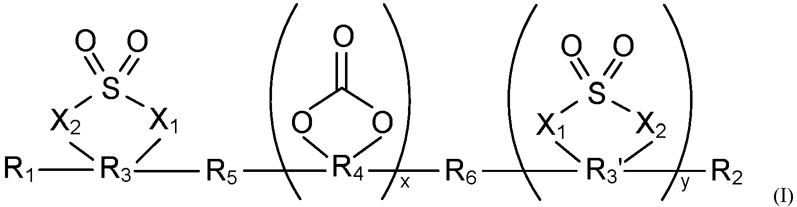 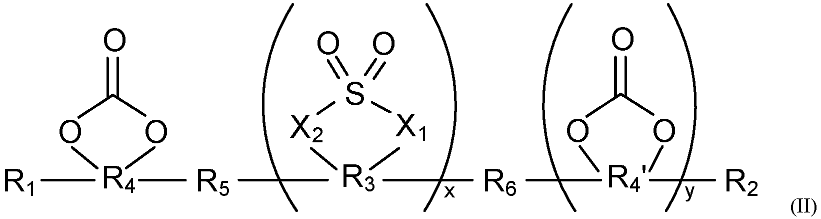
wherein x and y are each independently any natural number from 0 to 5, x + y ≥ 1, and X₁ and X₂ comprise O or CH₂ and X₁ and X₂ are not CH₂ simultaneously, R₃, R₄, R₃', and R₄' each independently comprise at least one of a saturated hydrocarbon group or an unsaturated hydrocarbon group, and R₅ and R₆ each independently comprise at least one of a saturated hydrocarbon group or an unsaturated hydrocarbon group having 1 to 6 carbon atoms, and a single bond; and
a second additive, wherein the second additive comprises at least one of SO₂ and CO₂.

2. The electrolyte solution according to claim 1, wherein a mass content of the second additive in the electrolyte solution is 10 ppm to 1000 ppm, and optionally, the mass content of the second additive in the electrolyte solution is 500 ppm to 800 ppm.

3. The electrolyte solution according to claim 1 or 2, wherein a mass content of the first additive in the electrolyte solution is 0.0001% to 10%, and optionally, the mass content of the first additive in the electrolyte solution is 0.01% to 5%.

4. The electrolyte solution according to any one of claims 1 to 3, wherein R₁ and R₂ each independently comprise at least one of H, a halogen atom, a substituted hydrocarbon group or an unsubstituted hydrocarbon group, and a group containing an unsaturated double bond or triple bond.

5. The electrolyte solution according to claim 4, wherein R₁ and R₂ each independently comprise at least one of H, F, a straight-chain alkyl group or branched-chain alkyl group having 1 to 3 carbon atoms, a straight-chain perfluorosubstituted alkyl group or branched-chain perfluorosubstituted alkyl group having 1 to 3 carbon atoms, and a group having 1 to 3 carbon atoms and containing an unsaturated double bond.

6. The electrolyte solution according to any one of claims 1 to 5, wherein R₅ and R₆ each independently comprise at least one of a saturated hydrocarbon group or an unsaturated hydrocarbon group having 1 to 3 carbon atoms.

7. The electrolyte solution according to any one of claims 1 to 6, wherein the first additive comprises at least one of the following substances:

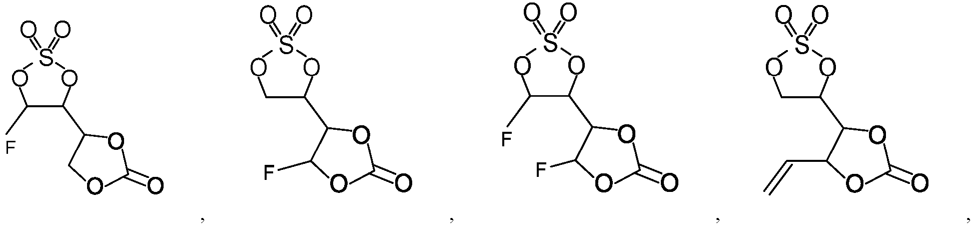

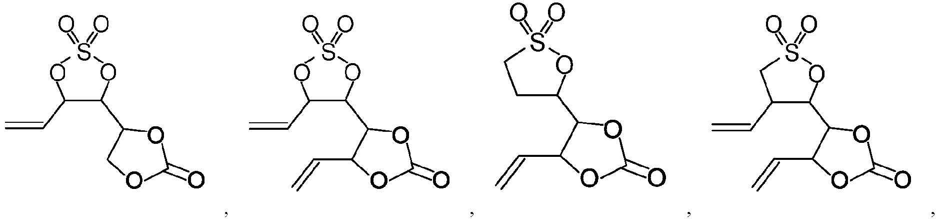

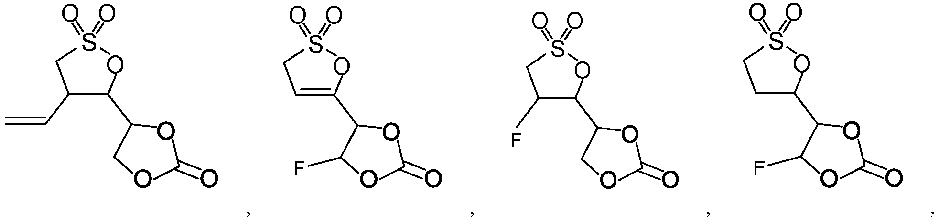

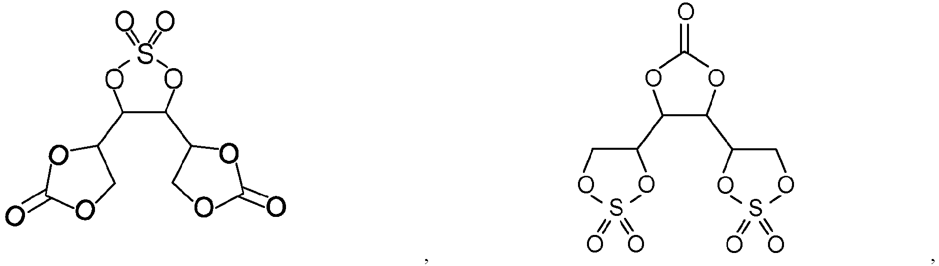

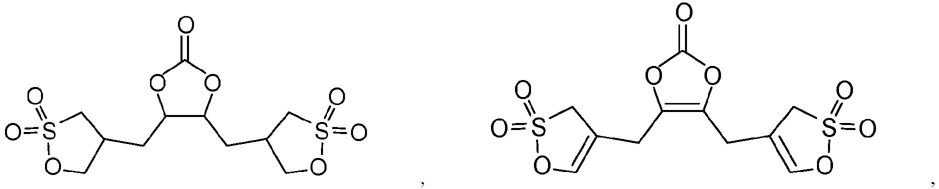

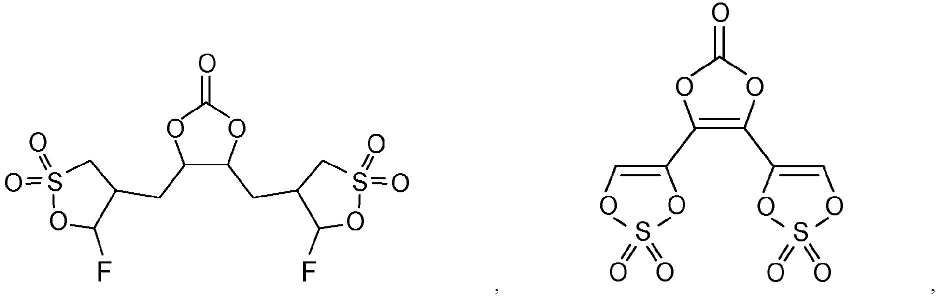

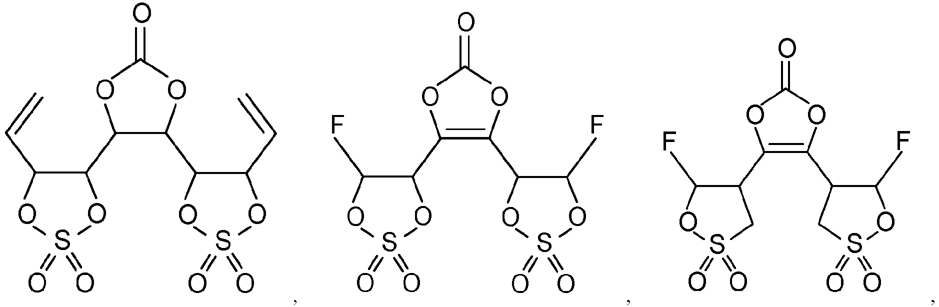

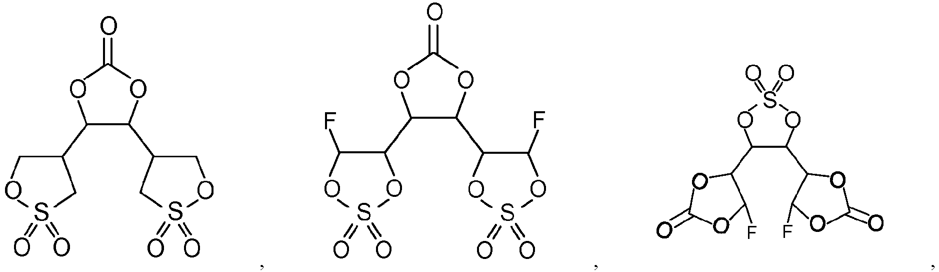

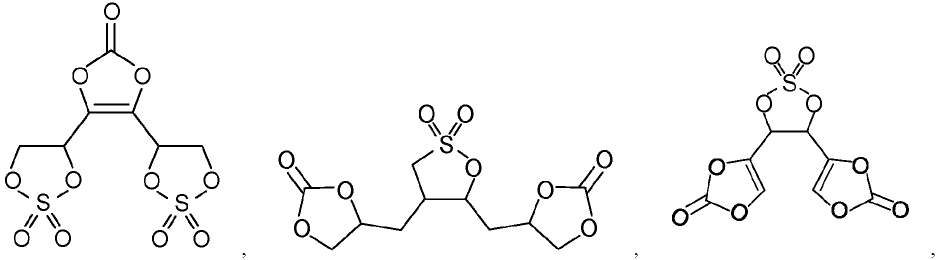

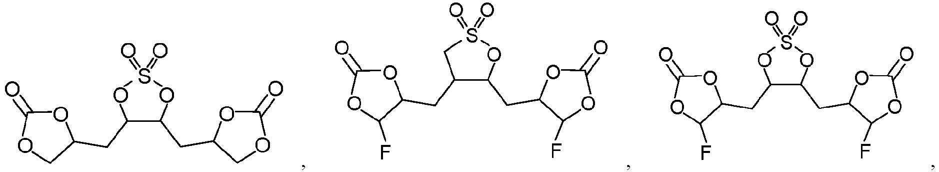

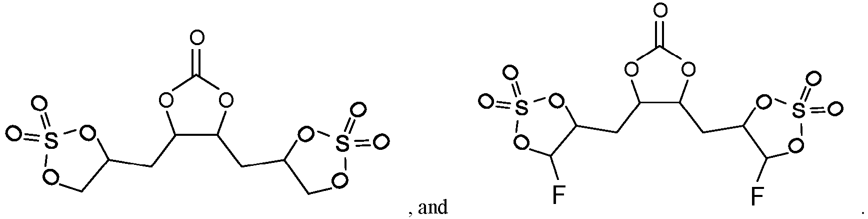

8. The electrolyte solution according to any one of claims 1 to 7, wherein the electrolyte solution further comprises a third additive, and the third additive comprises at least one of carbonate and sulfate.

9. The electrolyte solution according to claim 8, wherein the third additive comprises at least one of vinylene carbonate, difluoroethylene carbonate, fluoroethylene carbonate, vinyl ethylene carbonate, ethylene sulfate, and bis(ethylene sulfate).

10. The electrolyte solution according to any one of claims 1 to 9, wherein the electrolyte solution further comprises a polymerization inhibitor, and optionally, the polymerization inhibitor comprises at least one of hydroquinone and 2,6-di-tert-butyl-p-cresol.

11. The electrolyte solution according to claim 10, wherein a mass content of the polymerization inhibitor in the electrolyte solution is less than 20 ppm, and optionally, the mass content of the polymerization inhibitor in the electrolyte solution is less than 10 ppm.

12. The electrolyte solution according to any one of claims 1 to 11, wherein the electrolyte solution further comprises a solvent, and the solvent has a relative dielectric constant greater than 2 and a viscosity less than 2 mPa·s at 25°C.

13. The electrolyte solution according to claim 12, wherein the solvent comprises at least one of carbonate, carboxylic acid ester, ether, sulfone, fluorocarbonate, fluorocarboxylate, fluoroether, and fluorosulfone.

14. The electrolyte solution according to any one of claims 1 to 13, wherein the electrolyte solution further comprises a metal salt, the metal salt comprises at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorooxalate borate, lithium bis(oxalato)borate, lithium difluorophosphate, lithium difluorobis(oxalato)phosphate, and lithium tetrafluoro(oxalato)phosphate, and optionally, the metal salt comprises at least one of lithium hexafluorophosphate and lithium bis(fluorosulfonyl)imide.

15. The electrolyte solution according to any one of claims 1 to 14, wherein an acidity value of the electrolyte solution is less than 800 ppm.

16. A battery, comprising the electrolyte solution according to any one of claims 1 to 15.

17. A power consuming apparatus, comprising the battery according to claim 16, wherein the battery is configured to supply electric energy.
